# EUROPEAN PATENT APPLICATION

(11) **EP 4 832 426 A1**
(43) Date of publication of application: **28.10.2026**
(21) Application number: 24918894.7
(22) Date of filing: 19.01.2024
(51) Int. Cl.: H04L 25/03, H04B 17/336, H04B 1/12

(54) **METHOD AND APPARATUS FOR SUCCESSIVE NONLINEAR INTERFERENCE CANCELLATION IN WIRELESS COMMUNICATION SYSTEM**

(71) Applicant: Samsung Electronics Co., Ltd., Suwon-si, Gyeonggi-do 16677 (KR)
(72) Inventor: SEO, Bongsung, Suwon-si Gyeonggi-do 16677 (KR); KIM, Donghyeon, Suwon-si Gyeonggi-do 16677 (KR); KIM, Suhwook, Suwon-si Gyeonggi-do 16677 (KR); PARK, Seungil, Suwon-si Gyeonggi-do 16677 (KR); PARK, Yosub, Suwon-si Gyeonggi-do 16677 (KR)
(74) Representative: Gulde & Partner
(86) International application number: PCT/KR2024/000994
(87) International publication number: WO 2025/154859

(57) **Abstract**

The present disclosure relates to a 5G communication system or a 6G communication system for supporting higher data rates beyond a 4G communication system such as long term evolution (LTE). Specifically, according to various embodiments of the present disclosure, a method performed by a receiving device in a wireless communication system comprises the steps of: receiving a plurality of data packets from at least one transmitting device; decoding a first data packet from among the plurality of data packets; recovering the first data packet that has been decoded, on the basis of a reception signal quality of a second data packet from among the plurality of data packets and a reception signal quality of the decoded first data packet; and removing the recovered first data packet from the plurality of data packets.

## Description

### Technical Field

The disclosure relates generally to a wireless communication system and, more specifically, to an apparatus and a method for successive nonlinear interference cancellation in a wireless communication system.

### Background Art

Considering the development of wireless communication from generation to generation, the technologies have been developed mainly for services targeting humans, such as voice calls, multimedia services, and data services. Following the commercialization of 5G (5th generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). **It** is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, High-Altitude Platform Stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of Artificial Intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable super-high-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive eXtended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

Meanwhile, in order to extend coverage, methods of utilizing a power amplifier (PA) to generate higher output power are being employed. However, nonlinearity, which causes distortion of transmission signals, may occur in the high-output region of the PA. Accordingly, there is a need for a solution to improve nonlinearity without back-off while maintaining coverage.

### Disclosure of Invention

### Technical Problem

Various embodiments of the disclosure are to provide an apparatus and a method capable of effectively providing services in a wireless communication system.

### Solution to Problem

According to various embodiments of the disclosure, a method performed by a reception device in a wireless communication system may include receiving a plurality of data packets from at least one transmission device, decoding a first data packet among the plurality of data packets, reconstructing the decoded first data packet, based on a reception signal quality of a second data packet among the plurality of data packets and a reception signal quality of the decoded first data packet, and canceling the reconstructed first data packet from the plurality of data packets, wherein the decoding is performed based on information on nonlinearity between the at least one transmission device and the reception device.

According to various embodiments of the disclosure, a reception device in a wireless communication system may include a transceiver, and at least one controller connected to the transceiver, wherein the at least one controller is configured to receive a plurality of data packets from at least one transmission device, decode a first data packet among the plurality of data packets, reconstruct the decoded first data packet, based on a reception signal quality of a second data packet among the plurality of data packets and a reception signal quality of the decoded first data packet, and cancel the reconstructed first data packet from the plurality of data packets, wherein the decoding is performed based on information on nonlinearity between the at least one transmission device and the reception device.

### Advantageous Effects of Invention

Various embodiments of the disclosure are to provide a device and a method capable of effectively providing a service in a wireless communication system. More specifically, according to various embodiments of the disclosure, distortion of a transmission signal due to nonlinearity may be improved without back-off while ensuring the coverage of a transmission signal.

In addition, a reception device may adaptively operate according to a communication environment by differently applying an interference cancellation method by considering both complexity of a signal processing procedure and nonlinearity.

Advantageous effects obtainable from the disclosure are not limited to the above-mentioned effects, and other effects which are not mentioned herein will be clearly understood from the following description by those skilled in the art to which the disclosure pertains.

### Brief Description of Drawings

FIG. 1 illustrates an example of a wireless communication environment according to embodiments of the disclosure.
FIG. 2 illustrates an example of a structure of a base station in a wireless communication system according to embodiments of the disclosure.
FIG. 3 illustrates an example of a structure of a UE in a wireless communication system according to embodiments of the disclosure.
FIG. 4A illustrates an example of nonlinearity of a power amplifier in relation to embodiments of the disclosure.
FIG. 4B illustrates an example of signal distortion of a power amplifier in relation to embodiments of the disclosure.
FIG. 5 illustrates an example of nonlinearity compensation in relation to embodiments of the disclosure.
FIG. 6A illustrates an example of bit error ratio (BER) performance according to a receiver in relation to embodiments of the disclosure.
FIG. 6B is a block diagram of successive interference cancellation (SIC) in relation to embodiments of the disclosure.
FIG. 7 illustrates an example of **BER** performance according to a receiver in case that nonlinearity exists, in relation to embodiments of the disclosure.
FIG. 8 illustrates an example of a block diagram of successive nonlinear interference cancellation (SNIC) according to embodiments of the disclosure.
FIG. 9 illustrates an example of a block diagram of an SNIC according to embodiments of the disclosure.
FIG. 10 illustrates an operation sequence of a reception device according to embodiments of the disclosure.
FIG. 11 illustrates an operation sequence of a reception device according to embodiments of the disclosure.
FIG. 12 illustrates an example of multi-user multiple input & multiple output (MU-MIMO) according to embodiments of the disclosure.
FIG. 13 illustrates an example of single-user multiple input & multiple output (SU-MIMO) according to embodiments of the disclosure.
FIG. 14 illustrates a relationship between a modulation and coding scheme (MCS) and an error vector magnitude (EVM) according to embodiments of the disclosure.
FIG. 15 illustrates a relationship between an MCS and an EVM limit according to embodiments of the disclosure.
FIG. 16 illustrates an example of a signal processing procedure according to embodiments of the disclosure.
FIG. 17 illustrates an example of a signal processing procedure in a first stage according to embodiments of the disclosure.
FIG. 18 illustrates an example of a signal processing procedure in a second stage according to embodiments of the disclosure.
FIG. 19 illustrates an example of a signal processing procedure in a third stage according to embodiments of the disclosure.
FIG. 20 illustrates an example of a signal processing procedure in a fourth stage according to embodiments of the disclosure.
FIG. 21 illustrates an operation sequence of a reception device according to embodiments of the disclosure.
FIG. 22 illustrates a **BER** performance according to a receiver in a case where nonlinearity compensation (NC) is applied according to embodiments of the disclosure.

With regard to the description of the drawings, the same or like reference signa may be used to designate the same or like elements.

### Mode for the Invention

The terms used in the disclosure are used merely to describe particular embodiments, and may not be intended to limit the scope of other embodiments. Expressions in the singular may include expressions in the plural unless the context clearly indicates otherwise. The terms used herein, including technical and scientific terms, may have the same meaning as those commonly understood by a person skilled in the art to which the disclosure pertains. Among the terms user herein, such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

In the following description, terms referring to device elements (e.g., controller, processor, artificial intelligence (AI) model, encoder, decoder, autoencoder (AE), and neural network (NN) model) and terms referring to data (e.g., signal, feedback, report, reporting, information, parameter, value, bit, and codeword) are illustratively used for the sake of descriptive convenience. Therefore, the disclosure is not limited by the terms as described below, and other terms having similar or equivalent technical meanings may also be used.

Furthermore, various embodiments of the disclosure will be described using terms employed in some communication standards (e.g., the 3rd generation partnership project (3GPP)), but they are for illustrative purposes only. Various embodiments of the disclosure may be easily applied to other communication systems through modifications.

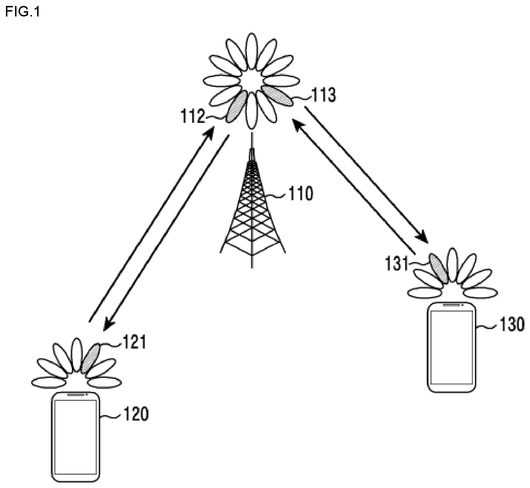

FIG. 1 illustrates a wireless communication system according to various embodiments of the disclosure; FIG. 1 illustrates a base station 110, a user equipment (UE) 120, and a **UE** 130 as some of nodes using radio channels in a wireless communication system. Although FIG. 1 illustrates only one base station, other base stations identical or similar to the base station 110 may be further included.

The base station 110 is a network infrastructure which provides the UEs 120 and 130 with radio access. The base station 110 has coverage which is defined as a certain geographical area, based on the distance over which the base station can transmit a signal. In addition to the term "base station", the base station 110 may be referred to as the term "access point (AP)", "eNodeB (eNB)", "gNodeB (gNB)", "5th generation node (5G node)", "6th generation node (6G node)", "wireless point", "transmission/reception point (TRP)", or other terms having equivalent technical meanings.

Each of the **UE** 120 and the **UE** 130 is a device used by a user and performs communication with the base station 110 via a radio channel. In some cases, at least one of the **UE** 120 and the **UE** 130 may be operated without the user's intervention. That is, at least one of the **UE** 120 and the **UE** 130 may be a device performing machine type communication (MTC), and may not be carried by a user. In addition to the term "user equipment (UE), the **UE** 120 and the **UE** 130 may be each referred to as the term "terminal", "mobile station", "subscriber station", "customer-premises equipment (CPE)", "remote terminal", "wireless terminal", "electronic device", "user device", or other terms having equivalent technical meanings.

The base station 110, the **UE** 120, and the **UE** 130 may transmit and receive wireless signals in millimeter wave (mmWave) bands (e.g., 28GHz, 30GHz, 38GHz, 60GHz, and over 60GHz). With regard to this, the base station 110, the **UE** 120, and the **UE** 130 may perform beamforming in order to improve channel gain. As used herein, the beamforming may include transmission beamforming and reception beamforming. That is, the base station 110, the **UE** 120, and the **UE** 130 may assign directivity to transmission or reception signals. To this end, the base station 110 and the UEs 120 and 130 may select serving beams 112, 113, 121, and 131 through a beam search or beam management procedure. After the serving beams 112, 113, 121, and 131 are selected, subsequent communication may be performed through resources having a quasi co-located (QCL) relationship with resources used to transmit the serving beams 112, 113, 121, and 131.

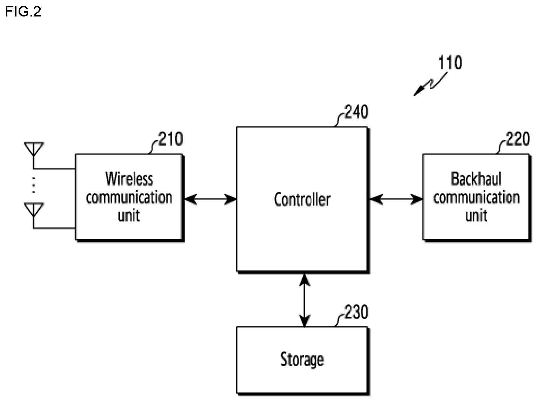

FIG. 2 illustrates an example of a structure of a base station in a wireless communication system according to embodiments of the disclosure. According to various embodiments of the disclosure, the base station 110 may be referred to as a network for the sake of convenience. The structure illustrated in FIG. 2 may be understood as a structure of the base station 110. As used herein, such terms as "... unit" and "-er" refer to a unit configured to process at least one function or operation, and may be implemented as hardware, software, or a combination of hardware and software.

Referring to FIG. 2, the base station 110 may include a wireless communication unit 210, a backhaul communication unit 220, a storage 230, and a controller 240.

The wireless communication unit 210 performs functions for transmitting/receiving signals through radio channels. For example, the wireless communication unit 210 performs functions for conversion between baseband signals and bitstrings according to the physical layer specifications of the system. For example, during data transmission, the wireless communication unit 210 generates complex symbols by encoding and modulating a transmission bitstream. In addition, during data reception, the wireless communication unit 210 restores a received bitstring by demodulating and decoding a baseband signal. In addition, the wireless communication unit 210 up-converts a baseband signal into a radio frequency (RF) band signal, transmits the same through an antenna, and down-converts an **RF** band signal received through the antenna into a baseband signal.

To this end, the wireless communication unit 210 may include a transmission filter, a reception filter, an amplifier, a mixer, an oscillator, a digital-to-analog converter (DAC), an analog-to-digital converter (ADC), or the like. Also, the wireless communication unit 210 may include multiple transmission/reception paths. Furthermore, the wireless communication unit 210 may include at least one antenna array configured by multiple antenna elements. In terms of hardware, the wireless communication unit 210 may be configured by a digital unit and an analog unit, and the analog unit may be configured by multiple subunits according to the operating power, operating frequency, and the like.

The wireless communication unit 210 may transmit/receive signals. To this end, the wireless communication unit 210 may include at least one transceiver. For example, the wireless communication unit 210 may transmit a synchronization signal, a reference signal, system information, a message, control information, data, or the like. In addition, the wireless communication unit 210 may perform beamforming.

The wireless communication unit 210 transmits and receives signals as described. Accordingly, all or part of the wireless communication unit 210 may be referred to as "transmitter", "receiver", or "transceiver". In addition, as used in the following description, the meaning of "transmission and reception performed through a radio channel" include the meaning that the above-described processing is performed by the wireless communication unit 210.

The backhaul communication unit 220 provides an interface for communicating with other nodes in the network. That is, the backhaul communication unit 220 converts bitstrings transmitted from the base station 110 to other nodes, for example, other access nodes, other base stations, upper-layer nodes, core networks, and the like into physical signals, and converts physical signals received from other nodes into bitstrings.

The storage 230 stores basic programs, application programs, and data, such as configuration information, for the operation of the base station 110. The storage 230 may include a memory. The storage 230 may be configured by a volatile memory, a nonvolatile memory, or a combination of a volatile memory and a nonvolatile memory. In addition, the storage 230 may provide the stored data at the request of the controller 240.

The controller 240 controls the overall operation of the base station 110. For example, the controller 240 transmits/receives signals through the wireless communication unit 210 or the backhaul communication unit 220. In addition, the controller 240 records data in the storage 230 and reads the data from the storage 230. The controller 240 may also perform functions of a protocol stack required by communication specifications. To this end, the controller 240 may include at least one processor.

Although not illustrated in FIG. 2, according to various embodiments of the disclosure, the base station 110 may further include a reception device for performing embodiments of the disclosure. Specifically, the reception device may be included in the wireless communication unit 210, or may also be included in the base station 110 separately from the wireless communication unit 210. Alternatively, the reception device may be located outside the base station 110 and connected wirelessly or wiredly to the base station 110. In this case, the reception device may include at least one receiver. In addition, the controller 240 may control the reception device to perform embodiments of the disclosure as described below.

The structure of the base station 110 illustrated in FIG. 2 is a merely an example of the base station, and examples of the base station for performing various embodiment of the disclosure are not limited to the structure illustrated in FIG. 2. That is, according to various embodiments of the disclosure, some components may be added, deleted, or modified.

Although the base station has been described as a single entity in FIG. 2, the disclosure is not limited thereto. The base station according to various embodiments of the disclosure may be implemented to form an access network that has distributed deployment, in addition to integrated deployment. According to an embodiment, the base station may be divided into a central unit (CU) and a digital unit (DU), the CU may be implemented to perform upper layer functions (e.g., radio link control (RLC), packet data convergence protocol (PDCP), and radio resource control (RRC)), and the DU may be implemented to perform lower layer functions (e.g., medium access control (MAC) and physical (PHY)). The DU of the base station 110 may form beam coverage on a radio channel.

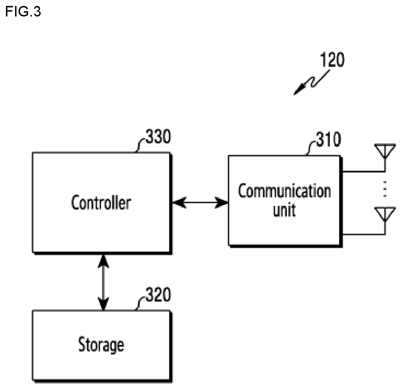

FIG. 3 illustrates an example of a structure of a UE in a wireless communication system according to embodiments of the disclosure. The structure illustrated in FIG. 3 may be understood as a structure of the UE 120 or 130. As used herein, such terms as "... unit" and "-er" refer to a unit configured to process at least one function or operation, and may be implemented as hardware, software, or a combination of hardware and software.

Referring to FIG. 3, the UE 120 or 130 may include a communication unit 310, a storage 320, and a controller 330.

The communication unit 310 performs functions for transmitting/receiving signals through radio channels. For example, the communication unit 310 performs functions of conversion between baseband signals and bitstrings according to the physical layer specifications of the system. For example, during data transmission, the communication unit 310 encodes and modulates a transmitted bitstring to generate complex symbols. In addition, during data reception, the communication unit 310 restores a received bitstring by demodulating and decoding a baseband signal. In addition, the communication unit 310 up-converts a baseband signal into a radio frequency (RF) band signal, transmits the same through an antenna, and down-converts an RF band signal received through the antenna into a baseband signal. For example, the communication unit 310 may include a transmission filter, a reception filter, an amplifier, a mixer, an oscillator, a DAC, an ADC, etc.

Also, the communication unit 310 may include multiple transmission/reception paths. Furthermore, the communication unit 310 may include an antenna unit. The communication unit 310 may include at least one antenna array configured by multiple antenna elements. In terms of hardware, the communication unit 310 may include a digital circuit and an analog circuit (e.g., radio frequency integrated circuit (RFIC)). Here, the digital circuit and the analog circuit may be implemented as a single package. In addition, the communication unit 310 may include multiple **RF** chains. The communication unit 310 may perform beamforming. In order to assign directivity based on configurations of the controller 310 to a signal to be transmitted/received, the communication unit 310 may apply a beamforming weight to the signal. According to an embodiment, the communication unit 310 may include a radio frequency (RF) block (or **RF** unit). The **RF** block may include first **RF** circuitry related to antennas and second **RF** circuitry related to baseband processing. The first **RF** circuitry may be referred to as an RF-antenna (RF-A). The second **RF** circuitry may be referred to as an RF-baseband (RF-B).

In addition, the communication unit 310 may transmit/receive signals. To this end, the communication unit 310 may include at least one transceiver. The communication unit 310 may receive a downlink signal. The downlink signal may include a synchronization signal (SS), a reference signal (RS) (e.g., demodulation (DM)-RS)), system information (e.g., master information block (MIB), system information block (SIB), remaining system information (RMSI), or other system information (OSI)), a configuration message, control information, downlink data, etc. The communication unit 310 may transmit an uplink signal. The uplink signal may include a random access-related signal (e.g., random-access preamble (RAP) (or message 1 (Msg1) and message 3 (Msg3)), a reference signal (e.g., sounding reference signal (SRS) or DM-RS), a power headroom report (PHR), etc.

In addition, the communication unit 310 may include different communication modules in order to process signals in different frequency bands. Furthermore, the communication unit 310 may include multiple communication modules in order to support multiple different radio access technologies. For example, the different radio access technologies may include Bluetooth low energy (BLE), wireless fidelity (Wi-Fi), Wi-Fi gigabyte (WiGig), cellular networks (e.g., long-term evolution (LTE)), new radio (NR), etc. Also, the different frequency bands may include a super high frequency (SHF) (e.g., 2.5GHz or 5GHz) band, a millimeter wave (mmWave) (e.g., 38GHz or 60GHz bands) band, etc. In addition, the communication unit 310 may use a radio-access technology of the same scheme on different frequency bands (e.g., an unlicensed band for licensed assisted access (LAA) and a citizen broadband radio service (CBRS) (e.g., 3.5 GHz)).

The communication unit 310 transmits and receives signals as described. Accordingly, all or part of the communication unit 310 may be referred to as a "transmitter", a "receiver", or a "transceiver". In addition, as used in the following description, the meaning of "transmission and reception performed through a radio channel" may include the meaning that the above-described processing is performed by the communication unit 310.

The storage 320 may store basic programs, application programs, and data, such as configuration information, for the operation of the **UE** 120. The storage 320 may be configured by a volatile memory, a nonvolatile memory, or a combination of a volatile memory and a nonvolatile memory. In addition, the storage 320 may provide the stored data at the request of the controller 330.

The controller 330 controls overall operations of the **UE** 120 or 130. For example, the controller 330 transmits and receives signals through the communication unit 310. In addition, the controller 330 records data in the storage 320 and reads the data from the storage 320. In addition, the controller 330 may perform functions of protocol stacks required by communication specifications. The controller 330 may include at least one processor. The controller 330 may include at least one processor or microprocessor, or may be a part of a processor. A part of the communication unit 310 and the controller 330 may be referred to as a cellular processor (CP). The controller 330 may include various modules for performing communication. According to various embodiments, the controller 330 may control the **UE to** perform the operations according to various embodiments.

Although not illustrated in FIG. 3, according to various embodiments of the disclosure, the **UE** 120 or 130 may further include a reception device for performing embodiments of the disclosure. Specifically, the reception device may be included in the communication unit 310, or may also be included in the **UE** 120 or 130 separately from the communication unit 310. Alternatively, the reception device may be located outside the **UE** 120 or 130 and connected wirelessly or wiredly to the **UE** 120 or 130. In this case, the reception device may include at least one receiver. In addition, the controller 330 may control the reception device to perform embodiments of the disclosure as described below.

The structure of the **UE** 120 or 130 illustrated in FIG. 3 is merely an example of the **UE,** and examples of the **UE** for performing various embodiments of the disclosure are not limited to the structure illustrated in FIG. 3. That is, according to various embodiments of the disclosure, some components may be added, deleted, or modified.

Meanwhile, in the embodiments of the disclosure below, operations of the reception device may be performed by incorporating artificial intelligence (AI) technology. For example, the reception device may be capable of learning through an AI model. As a learning method of the AI model, there may be a supervised learning scheme for training the AI model by using a ground-truth value as a labeling value of training data. Alternatively, as a learning method of the AI model, there may be an unsupervised learning scheme for extracting relationships and characteristics between data in a state in which there is no ground-truth value. In addition, as a learning method of the AI model, there may be a reinforcement learning scheme for training the AI model through a reward system. Among the above-described learning methods of the AI model, supervised learning may make it difficult to collect labeled data, but may train an AI model having good performance. An AI model may include an offline-training scheme in which a well-trained model is mounted from the beginning and an online-training scheme in which the model is continuously updated to reflect a continuously changing environment. In the offline-training scheme, when a change of the AI model is not required, additional training may not be required once the AI model is trained through a large data set. For example, in a chip design process, the corresponding AI model may be trained in advance, and the trained AI model may then be mounted in an algorithm of a chip. However, when the environment continuously changes, since it is difficult for a fixed AI model to reflect the changing environment, the online-training scheme in which the AI model is continuously updated may be a more suitable scheme.

Hereinafter, operations of a reception device for ensuring coverage while improving nonlinearity in embodiments of the disclosure may be performed by the AI model described above. Therefore, a nonlinearity compensation scheme via an AI model may also be referred to as an AI-NC technology.

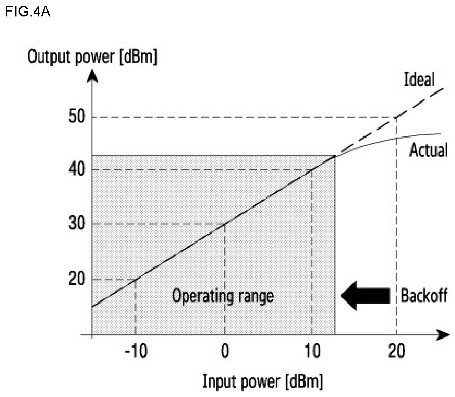

FIG. 4A illustrates an example of nonlinearity of a power amplifier in relation to the embodiments of the disclosure.

Referring to FIG. 4A, distortion of a transmission signal according to a nonlinear characteristic of a high-output region of a PA may be described. Various technologies have been proposed to extend coverage. Accordingly, there may be a method of transmitting a signal with higher output power by using a power amplifier (hereinafter referred to as a PA). However, in the high-output region of the PA, use of the PA with high power may be limited because nonlinearity may occur, in which a phase and magnitude of a transmission signal are distorted. For example, due to the nonlinear characteristics, output power may not be uniformly amplified according to the input power, and an output of an actual amplified signal may be reduced. Accordingly, in order to avoid the operation in a nonlinear region, a back-off process may be performed to limit an operating range of the PA to an output lower than the maximum output power. When back-off is applied, a probability that a PA input signal is included in the nonlinear region is lowered, such that degradation in data reception performance due to nonlinearity may be improved. However, there may occur a problem in which coverage is reduced (e.g., coverage loss) because transmission power is relatively lowered. To solve the above-described problem, a peak-to-average power ratio (PAPR) reduction technique, a digital pre-distortion (DPD) technique, and an NC technique have been discussed. In addition, discussions on a method for solving nonlinearity by using artificial intelligence (AI) are also continuing.

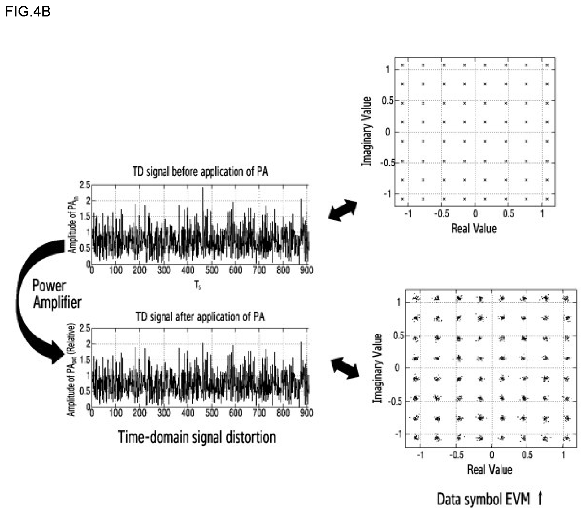

FIG. 4B illustrates an example of signal distortion of a power amplifier in relation to embodiments of the disclosure.

Referring to FIG. 4B, distortion of a time domain (TD) signal after application of a PA may be described. In addition, an error vector magnitude (EVM) before and after application of the PA may be described. For example, in the time domain, signal distortion may occur in a transmission signal after applying the PA. In particular, the larger the transmission power of the transmission signal, the larger the degree of distortion of the signal. For example, on a constellation diagram, a signal after application of the PA may have a non-ideal EVM compared to a signal before application of the PA.

Therefore, in the disclosure, methods for solving a nonlinearity problem caused by applying a PA to a transmission signal may be described. Specifically, methods for removing a non-linear characteristic while a reception device reconstructs a transmission signal that has passed through the PA may be described. As an embodiment, NC, successive interference cancellation (SIC), and successive nonlinear interference cancellation (SNIC) may be proposed as methods for removing the nonlinear characteristic. As an embodiment, a method of determining whether to apply at least one of the above-described methods for removing the nonlinear characteristic according to a communication environment may be proposed.

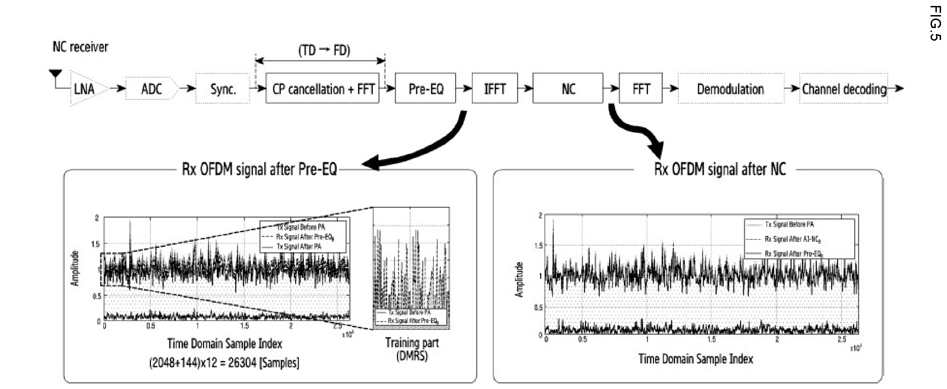

FIG. 5 illustrates an example of nonlinearity compensation in relation to embodiments of the disclosure.

Referring to FIG. 5, a block diagram of a receiver for compensating for nonlinearity (hereinafter, an NC receiver) may be described. For example, the NC receiver may be a receiver further including an NC block that performs an NC operation. The NC receiver may further perform the NC operation in a process of demodulating symbols on each subcarrier through a fast Fourier transform (FFT) algorithm after removing a cyclic prefix (CP).

More specifically, the NC receiver may remove a CP from a received signal and then convert a signal in a time domain into a signal in a frequency domain (FD) through an **FFT** algorithm. The NC receiver may filter a transmission signal through a pre-equalizer (EQ). An output of a received signal after the pre-EQ (e.g., the received OFDM) may be reduced compared to the transmission signal before application of the PA. In this case, the pre-EQ may include frequency domain channel estimation (FD CE) and FD EQ. Thereafter, the NC receiver may convert the signal in the frequency domain back into the signal in the time domain through an inverse fast Fourier transform (hereinafter, referred to as IFFT).

In an embodiment, the NC receiver may compensate for nonlinearity of a data symbol from a signal in a time domain (e.g., a received signal after pre-EQ) through an NC operation. For example, the NC receiver may obtain information on nonlinearity through a reference signal (RS) (e.g., including at least one of a demodulation reference signal (DMRS), a primary synchronization signal (PSS), a secondary synchronization signal (SSS), a sounding reference signal (SRS), or a channel state information reference signal (CSI-RS)). The NC receiver may compensate for nonlinearity of a data symbol, based on the obtained information on nonlinearity. In this case, the nonlinearity information may include information regarding characteristics of a reference signal commonly known to a transmission device and a reception device, the reference signal being distorted due to nonlinearity during a transmission process. For example, the NC receiver may compensate for nonlinearity of the received signal by reflecting, in the received signal, distortion characteristics of the reference signal during the transmission process.

Accordingly, a received signal after NC (e.g., a received signal after AI-NC) may be a signal closer to a transmission signal before application of the PA than a received signal before NC. The NC receiver may perform **FFT** again on the received signal after NC, and then perform demodulation and channel decoding.

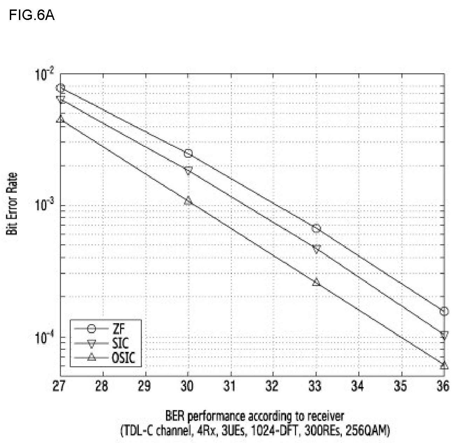

FIG. 6A illustrates an example of BER performance according to a receiver in relation to embodiments of the disclosure.

Referring to FIG. 6A, a graph showing bit error rate (or, bit error ratio, hereinafter referred to as "BER") performance according to a type of receiver under a specific condition (e.g., in a case of a tapped delay line (TDL)-C channel, 4Rx, 3UEs, 1024-discrete Fourier transform (DFT), 300 resource elements (REs), and 256 quadrature amplitude modulation (QAM)) is illustrated.

For example, in a signal-to-noise ratio (SNR)-BER graph of receivers respectively including zero-forcing (ZF), SIC, and ordered successive interference cancellation (OSIC) operations, an error rate of a receiver performing the OSIC operation may be lowest. In this case, the OSIC may be a method in which packets are sequentially decoded starting from a packet having greatest channel power. In embodiments of the disclosure, a packet, as a data processing unit, may be received through different layers in single-user multiple input & multiple output (SU-MIMO) or multi-user multiple input & multiple output (MU-MIMO).

In this case, when a reception device receives a plurality of data signals transmitted while sharing frequency, time, and/or space in an overlapped manner, the reception device may decode part of a received signal. In addition, the reception device may reconstruct an original signal by using a decoded data packet. Further, the reception device may apply SIC that repeatedly performs a process of canceling the reconstructed signal from the received signal in a successive manner. A bundle unit of data signals to be sequentially decoded may be referred to as a "packet". In addition, a series of processes of decoding each packet and canceling a reconstructed packet from an original signal may be referred to as a "stage". Accordingly, the SIC may be a method of repeatedly performing stages in proportion to the number of overlapped packets. Ordered-SIC (OSIC), which performs SIC by determining an order in consideration of a channel state experienced for each packet, may be a method for minimizing an error propagation problem in which an error occurring in a previous stage adversely affects a subsequent stage in a process of canceling a reconstructed signal from a received signal. Accordingly, in FIG. 6A illustrating performance according to a reception technique, there may be a reception performance gain when SIC or OSIC is applied.

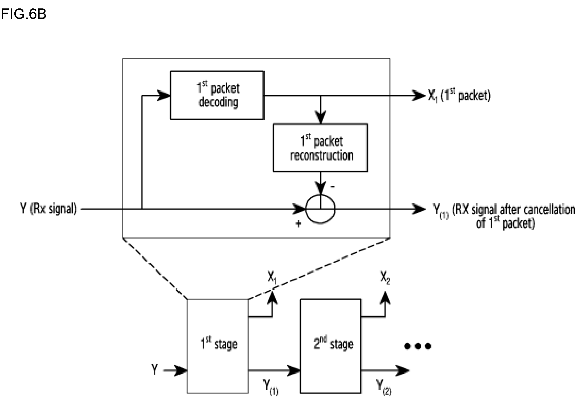

FIG. 6B is a block diagram of SIC in relation to embodiments of the disclosure.

Referring to FIG. 6B, a block diagram of a receiver performing a successive interference cancellation (e.g., SIC) method may be illustrated. A reception device may improve reception performance by performing successive cancellation of co-channel interference occurring when a plurality of signals are received through a common resource (e.g., a reference signal).

In an embodiment, the reception device may decode a first packet from a received signal (Y). The reception device may reconstruct a received signal of the first packet by using the decoded first packet (X_1). The reception device may cancel the received signal (X_1) of the first packet reconstructed from an original signal (e.g., an initially received signal). The above-described procedures may be classified as one stage. In addition, the reception device may use a signal Y_(1) output from a first stage as an original signal in a stage for a second packet. Accordingly, the reception device may perform a successive interference cancellation method for canceling interference of a signal in a subsequent stage, based on a signal output from a previous stage. The reception device may sequentially perform the above-described operations for each packet until all packets are decoded.

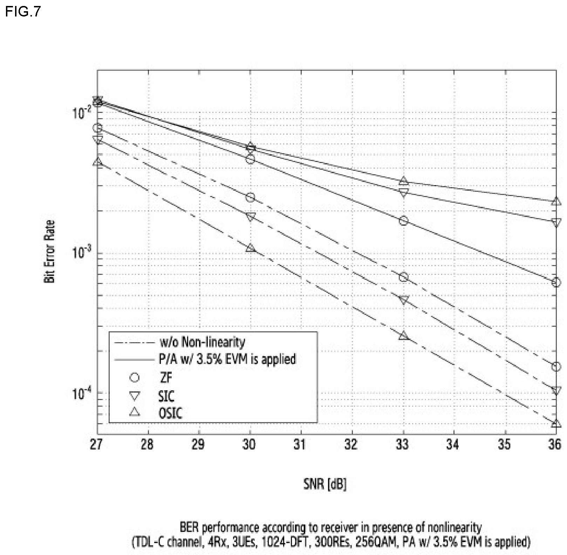

FIG. 7 illustrates an example of BER performance according to a receiver in a case where nonlinearity exists, in relation to embodiments of the disclosure.

Referring to FIG. 7, when nonlinearity exists, a graph showing BER performance according to a type of receiver under a specific condition (e.g., when a PA having a TDL-C channel, 4Rx, 3UEs, 1024-DFT, 300 REs, 256 QAM, and 3.5% EVM is applied) is illustrated. FIG. 7 may illustrate reception performance when SIC, OSIC, and ZF are performed in a situation in which signals distorted due to a nonlinear characteristic are received while sharing frequency, time, and space. For example, FIG. 7 may compare, for each reception device performing the OSIC, SIC, and ZF methods, a case in which there is no nonlinear characteristic and a case in which a PA having 3.5% EVM is applied. In each reception device performing the OSIC, SIC, and ZF methods, a case in which there is no nonlinear characteristic may have a lower BER at the same SNR than a case in which the PA is applied and the nonlinear characteristic occurs. Therefore, when a PA is applied in various interference cancellation schemes, reception performance may deteriorate due to occurrence of the nonlinear characteristic.

When a received signal (e.g., a received signal to which PA has been applied) that has experienced nonlinearity passes through an SIC reception device, a degradation in reception performance may occur due to an error between the actual received signal that has experienced nonlinearity and a signal reconstructed by using a decoded packet. When SIC that does not consider nonlinearity is performed on a distorted signal due to nonlinearity, reception performance may deteriorate as stages are repeated due to an error propagation problem between the actual received signal that has undergone nonlinearity and the signal reconstructed by using the decoded packet. In particular, when OSIC is applied, the error propagation problem may become more severe, and thus reception performance may further deteriorate. In order to alleviate the error propagation problem, when reconstructing an original signal by using a data packet decoded at each stage, it is necessary to improve the error propagation problem by accurately reconstructing the signal in consideration of nonlinearity experienced by the corresponding packet together.

Embodiments of the disclosure may include a signal reconstruction method considering nonlinearity so as to alleviate an error propagation problem by accurately reconstructing and canceling a signal at each stage when SIC or OSIC is performed in a situation in which signals distorted due to nonlinearity are received while sharing frequency, time, and space. Accordingly, unlike conventional SIC and OSIC reception techniques, a reception device may obtain nonlinearity information applied to a data signal at each stage, and may additionally perform a process of reconstructing the signal by using the obtained nonlinearity information. In addition, when decoding a data signal at each stage, the reception device may perform NC at each stage in order to improve performance.

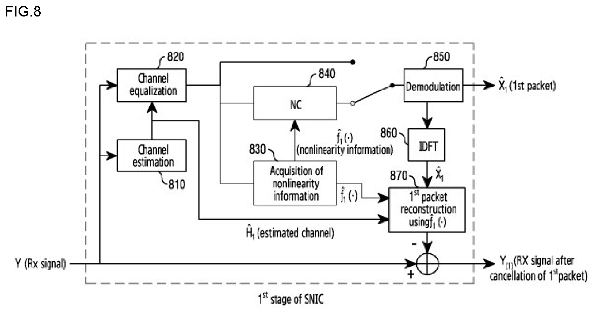

FIG. 8 illustrates an example of a block diagram of an SNIC according to embodiments of the disclosure.

Referring to FIG. 8, a block diagram related to a first stage in a reception device that performs an SNIC operation may be illustrated. When a reception device receives a plurality of data signals transmitted while sharing frequency, time, and space in an overlapped manner, the reception device may apply SIC that repeatedly performs a process of decoding part of a received signal and reconstructing and canceling an original signal from the received signal by using a decoded data packet, and OSIC that performs SIC by determining a decoding order for an additional performance gain. In this case, in order to secure excellent reception performance while minimizing an error propagation problem with respect to a signal distorted due to nonlinearity, the reception device may perform SNIC that performs decoding and reconstruction in consideration of information on nonlinearity when decoding part of the received signal and reconstructing an original signal by using the decoded data packet.

In operation 810, the reception device may perform channel estimation on a received signal (Y). For example, the reception device may estimate a channel status between a transmission device and a reception device, based on a reference signal commonly known to the transmission device and the reception device. In this case, the estimated channel may be expressed as **Ĥ**₁. Therefore, the received signal may be expressed by Equation 1 below. [Equation 1] $Y = {H}_{1} DFT \left\{{f}_{1}\left({x}_{1}\right)\right\} + {H}_{2} DFT \left\{{f}_{2}\left({x}_{2}\right)\right\} + ⋯$

In operation 820, the reception device may perform channel equalization through an equalizer, based on the estimated channel information. For example, the reception device may compensate for a channel distortion with regard to the received signal (Y). Specifically, the channel equalization may be a procedure in which the reception device has a uniform characteristic in terms of amplitude and phase over an entire frequency domain.

In operation 830, the reception device may obtain, from a received signal to be decoded in a first stage, information on nonlinearity (*f̂*₁) experienced by the received signal. The nonlinearity information may be obtained by using a reference signal commonly known to a transmission device and a reception device, such as an existing reference signal (e.g., including at least one of a DMRS, a PSS, an SSS, an SRS, or a CSI-RS) or a reference signal separately defined for NC. Although a block for obtaining the nonlinearity information is illustrated after a channel equalization block of operation 820 in FIG. 8, the disclosure is not limited thereto. Accordingly, the reception device may perform a procedure for obtaining the nonlinearity information before a channel equalization procedure.

In operation 840, when decoding part of a received signal in the first stage, the reception device may perform NC selectively according to a degree of nonlinearity experienced by the received signal. For example, the reception device may determine whether to perform NC by reflecting the nonlinearity information (*f̂*₁) acquired in operation 830. Accordingly, when the reception device determines to perform NC, the same or similar operations as the NC described in FIG. 5 may be performed.

In operation 850, the reception device may perform demodulation on a first packet for which NC has been performed. Accordingly, demodulated signal (e.g., **X̂**₁) regarding the first packet may be output.

In operation 860, the reception device may perform an inverse discrete Fourier transform (IDFT) on the demodulated signal (e.g., **X̂**₁) for the first packet.

In operation 870, the reception device may reconstruct an original signal (e.g., a first packet) from a decoded data packet (e.g., **X̂**₁) by considering nonlinearity information (*f̂*₁). In this case, a scheme of reconstructing the original signal from the decoded data packet (e.g., **X̂**₁) by considering nonlinearity information (e.g., *f̂*₁) may be referred to as "SNIC". Alternatively, the reception device may reconstruct the original signal from the decoded data packet (e.g., **X̂**₁) without considering the nonlinearity information. In this case, a scheme of reconstructing the original signal from the decoded data packet (e.g., **X̂**₁) without considering nonlinearity information may be referred to as "SIC". A signal reconstructed through the SNIC may be represented as Equation 2 below.

[Equation 2] ${\hat{H}}_{1} DFT \left\{{\hat{f}}_{1}\left({\hat{x}}_{1}\right)\right\}$

In addition, the reception device may cancel the reconstructed original signal (e.g., Equation 2) from the received signal (Y), and the same may be expressed as Equation 3 below. [Equation 3] ${Y}_{\left(1\right)} = Y - {\hat{H}}_{1} DFT \left\{{\hat{f}}_{1}\left({\hat{x}}_{1}\right)\right\}$

In the above-described procedure, a reconstructed k-th packet that is obtainable by the reception device from the received signal, and a received signal from which the reconstructed k-th packet has been canceled may be represented by Equation 4 and Equation 5 below, respectively. [Equation 4] ${\hat{H}}_{k} DFT \left\{\hat{{f}_{k}}\left({\hat{x}}_{k}\right)\right\}$ [Equation 5] $\begin{matrix}{Y}_{\left(k\right)} = Y - {\sum }_{i = 1}^{k} {\hat{H}}_{i} DFT \left\{{\hat{f}}_{i}\left({\hat{x}}_{i}\right)\right\} \\ = {Y}_{\left(k-1\right)} - {\hat{H}}_{k} DFT \left\{{\hat{f}}_{k}\left({\hat{x}}_{k}\right)\right\}\end{matrix}$

However, the above-described operations are merely an example, and are not limited to an embodiment of the disclosure. Therefore, some of the above-described operations may be merged or divided into two or more operations. In addition, at least one of the above-described operations may be omitted, and a new operation may be added. In this case, the added at least one operation may be organically combined with the above-described operations.

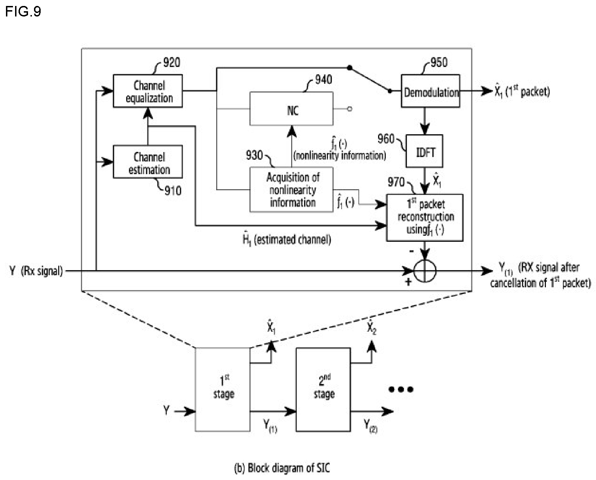

FIG. 9 illustrates an example of a block diagram of an SNIC according to embodiments of the disclosure.

Referring to FIG. 9, a block diagram related to a first stage in a reception device performing an SNIC operation may be illustrated. However, unlike the operation of FIG. 8 described above, an operation in which the reception device demodulates a first packet without considering nonlinearity information (*f̂*₁) may be described. Accordingly, descriptions overlapping with those of FIG. 8 described above may be omitted.

In operation 910, the reception device may perform channel estimation on a received signal (Y). For example, the reception device may estimate a channel state between a transmission device and the reception device, based on a reference signal commonly known to the transmission device and the reception device. In this case, the estimated channel may be represented as **Ĥ**₁.

In operation 920, the reception device may perform channel equalization through an equalizer, based on the estimated channel information. For example, the reception device may compensate for channel distortion of the received signal (Y). Specifically, through channel equalization, the reception device may perform a procedure for allowing amplitude and phase characteristics to be uniform over an entire frequency domain.

In operation 930, the reception device may obtain, from a received signal to be decoded in a first stage, information on nonlinearity (*f̂*₁) experienced by the received signal. The nonlinearity information may be acquired by using a reference signal commonly known to the transmission device and the reception device, such as a conventional reference signal (e.g., including at least one of a DMRS, PSS, SSS, SRS, or CSI-RS) or a reference signal separately defined for NC. Although a block for obtaining the nonlinearity information is illustrated after a channel equalization block of operation 920 in FIG. 9, the disclosure is not limited thereto. Accordingly, the reception device may perform a procedure of obtaining the nonlinearity information before a channel equalization procedure.

In operation 940, when decoding part of the received signal in the first stage, the reception device may selectively perform NC according to a degree of nonlinearity experienced by the received signals. For example, the reception device may determine whether to perform NC by reflecting the nonlinearity information (*f̂*₁) acquired in operation 930. Accordingly, when the reception device determines not to perform NC, the reception device may perform demodulation (e.g., operation 950 below) without performing NC after operation 920.

In operation 950, the reception device may perform demodulation on a first packet for which NC is not performed. Therefore, a demodulated signal (e.g., **X̂**₁) for the first packet may be output.

In operation 960, the reception device may perform an **IDFT** on the demodulated signal (e.g., **X̂**₁) for the first packet.

In operation 970, the reception device may perform SNIC. For example, the reception device may reconstruct an original signal (e.g., a first packet) from the decoded data packet (e.g., **X̂**₁) by considering the nonlinearity information (e.g., *f̂*₁). In addition, the reception device may cancel the reconstructed original signal from the received signal (Y).

However, the above-described operations are merely an example, and are not limited to an embodiment of the disclosure. Therefore, some of the above-described operations may be merged or divided into two or more operations. In addition, at least one of the above-described operations may be omitted, and a new operation may be added. In this case, the added at least one operation may be organically combined with the above-described operations.

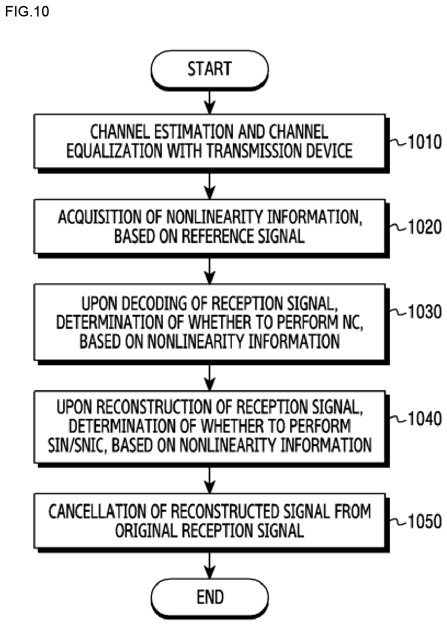

FIG. 10 illustrates a sequence of operations of a reception device according to embodiments of the disclosure.

Referring to FIG. 10, an operation sequence in which the reception device demodulates and reconstructs one packet from a received signal and cancels the reconstructed signal from the received signal in FIG. 8 or 9 described above may be described.

In operation 1010, the reception device may perform channel estimation on the received signal. For example, the reception device may estimate a channel state between a transmission device and the reception device, based on a reference signal commonly known to the transmission device and the reception device. In addition, the reception device may perform channel equalization through an equalizer, based on the estimated channel information. For example, the reception device may compensate for channel distortion of the received signal. Specifically, through channel equalization, the reception device may perform a procedure for allowing amplitude and phase characteristics to be uniform over an entire frequency domain.

In operation 1020, the reception device may obtain, from a received signal to be decoded in a corresponding stage, information on the nonlinearity experienced by the received signal. The nonlinearity information may be obtained by using a reference signal commonly known to a transmission device and a reception device, such as an existing reference signal (e.g., including at least one of a DMRS, PSS, SSS, SRS, and CSI-RS) or a reference signal separately defined for NC. However, the reception device may perform a procedure for obtaining the nonlinearity information before a channel equalization procedure.

In operation 1030, when decoding part of the received signal in a corresponding stage, the reception device may selectively perform NC according to a degree of nonlinearity experienced by the received signal. For example, the reception device may determine whether to perform NC, by reflecting the nonlinearity information obtained in operation 1020.

In operation 1040, the reception device may perform demodulation and reconstruction on a packet for which the NC has been performed. When performing reconstruction of a decoded data packet, the reception device may determine whether to perform SIC or SNIC, based on the nonlinearity information. The reception device may reconstruct the packet according to the determined method. In this case, for the SNIC technique considering nonlinearity, since a process of obtaining nonlinearity information and NC or signal reconstruction using the obtained nonlinearity information should be performed, complexity of a signal processing procedure may increase instead of obtaining improved reception performance. Accordingly, through a selection operation of a successive interference cancellation scheme in operation 1040, when the reception device selects SIC, an effect of reducing complexity may occur, and when the reception device selects SNIC, an effect of improving reception performance may occur.

In operation 1050, the reception device may cancel a signal reconstructed according to the operation performed in operation 1040 described above (for example, SIC or SNIC) from an original received signal.

However, the above-described operations are merely an example, and are not limited to an embodiment of the disclosure. Therefore, some of the above-described operations may be merged or divided into two or more operations. In addition, at least one of the above-described operations may be omitted, and a new operation may be added. In this case, the added at least one operation may be organically combined with the above-described operations.

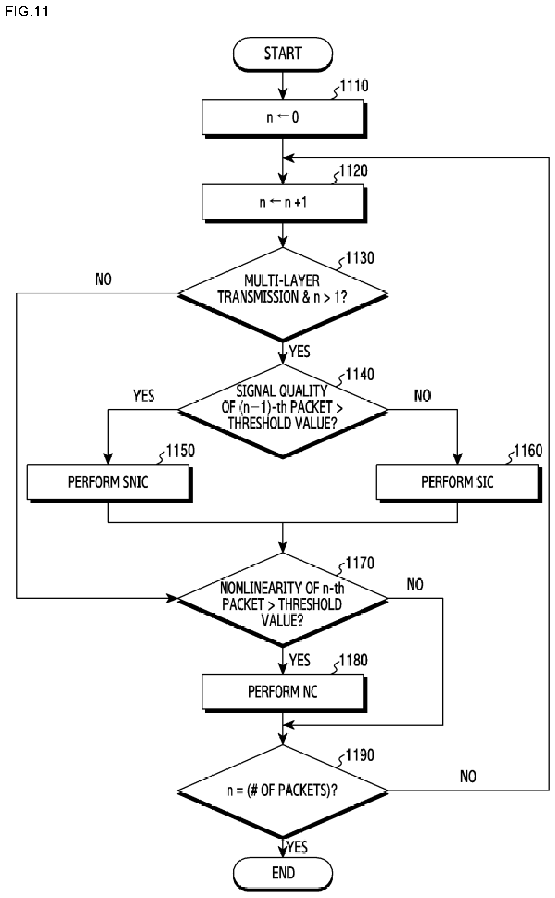

FIG. 11 illustrates an operation sequence of a reception device according to embodiments of the disclosure.

Referring to FIG. 11, a method of determining whether to perform NC in operation 1030 and a method of selecting SIC/SNIC in operation 1040 of FIG. 10 may be described. Accordingly, a description overlapping with those of FIG. 10 described above may be omitted.

In operation 1110, when a reception device receives a signal from a transmission device, the reception device may initialize n to 0 (n=0) for part of the received signal (for example, an n-th packet). For example, the reception device may initialize n to 0 (n=0) for a packet of the received signal for which reconstruction is to be performed in a first stage.

In operation 1120, the reception device may configure n=n+1 for the n-th packet for which n is initialized to 0 (n=0). For example, the reception device may configure n=1 with respect to a packet of the received signal for which reconstruction is to be performed in the first stage. Accordingly, the reception device may perform a reconstruction procedure for a first packet in the first stage.

In operation 1130, the reception device may identify whether the received signal is a signal transmitted through multiple layers and whether n has a value greater than 1. In this case, a signal transmitted through multiple layers may be understood as meaning that a plurality of data signals are received in an overlapped manner while sharing frequency, time, and/or space. For example, in the case of SU-MIMO, this may refer to a case in which a plurality of data signals are received in an overlapped manner through a plurality of antennas from one transmission device. In this case, two or more packets included in the received signal may refer to a plurality of data signals received from one transmission device. Alternatively, in the case of MU-MIMO, this may refer to a case in which a plurality of data signals are received in an overlapped manner from a plurality of transmission devices. For example, the n-th packet may refer to an n-th data signal received from a UE. In this case, when multi-layer transmission is performed or n is 1 (for example, when a reconstruction procedure for the first packet is performed), operation 1170 may be performed. In this case, two or more packets included in the received signal may refer to a plurality of data signals received from a plurality of transmission devices. For example, the n-th packet may refer to a data signal received from an n-th UE.

In operation 1170, the reception device may determine whether to perform NC, based on non-linear information (*f̂*) of the received signal and an EVM limit (EVM limit vale or EVM threshold). Hereinafter, in embodiments of the disclosure, the EVM limit may be referred to as an EVM threshold value. Specifically, the reception device may compare an EVM threshold value for a first packet with an EVM value of the first packet considering nonlinearity. However, in operation 1170, an inequality sign is merely an example, and thus may also include a case in which the EVM value of the first packet considering nonlinearity is equal to the EVM threshold value for the first packet. In this case, the EVM is merely one example of indicators for representing quality of a received signal. Accordingly, in addition to the EVM, modulation error (MER), mean square error (MSE), or signal-to-noise ratio (SNR) may also be used as an indicator for determining quality of the received signal.

In operation 1180, when an EVM value of a packet considering nonlinearity is greater than an EVM threshold value for the packet, the reception device may perform NC when decoding the packet. For example, when the EVM value of the first packet considering nonlinearity is greater than the EVM threshold value for the first packet, the reception device may perform NC when decoding the first packet in order to compensate for nonlinearity.

In operation 1190, after performing NC, the reception device may identify whether a decoded packet is identical to a total number of packets included in the received signal. For example, when the reception device performs NC on the first packet, operation 1120 described above may be performed again.

In operation 1140, when the transmission is multi-layer transmission and n is greater than 1, the reception device may identify whether the signal quality (e.g., an EVM value considering nonlinearity) of the (n-1)th packet is greater than the EVM threshold value of the n-th packet. For example, the reception device may identify whether the signal quality (e.g., an EVM value considering nonlinearity) of the first packet is greater than the EVM threshold value of the second packet. However, the inequality sign in operation 1140 is merely an example, and thus may include a case in which the signal quality of the (n-1)th packet is equal to the EVM threshold value of the n-th packet.

In operation 1150, when the signal quality (e.g., an EVM value considering nonlinearity) of the (n-1)th packet is greater than the EVM threshold value of the n-th packet, the reception device may perform SNIC. When the signal quality (e.g., an EVM value considering nonlinearity) of the (n-1)th packet is greater than the EVM threshold value of the n-th packet, nonlinearity may affect reception performance, and therefore, an SNIC considering nonlinearity may need to be performed, even if the complexity of a signal processing procedure increases. For example, when the signal quality (e.g., EVM value considering nonlinearity) of the first packet is greater than the second EVM threshold, the reception device may perform SNIC for the first packet in consideration of nonlinearity. After performing operation 1150, the reception device may again perform the above-described operations starting from operation 1170.

In operation 1160, when signal quality (e.g., EVM value considering nonlinearity) of the (n-1)th packet is less than an EVM threshold value of an n-th packet, the reception device may perform SIC. In the case that the signal quality (e.g., an EVM value considering nonlinearity) of the (n-1)th packet is less than or equal to the EVM threshold value of the n-th packet, SIC needs to be performed by considering an influence of the complexity of a signal processing procedure more than an influence of nonlinearity. For example, when the signal quality (e.g., an EVM value considering nonlinearity) of a first packet is less than an EVM threshold value of a second packet, the reception device may perform SIC on the first packet without considering nonlinearity. After performing operation 1160, the reception device may perform again the above-described operations starting from operation 1170.

However, the above-described operations are merely an example, and are not limited to an embodiment of the disclosure. Therefore, some of the above-described operations may be merged or divided into two or more operations. In addition, at least one of the above-described operations may be omitted, and a new operation may be added. In this case, the added at least one operation may be organically combined with the above-described operations.

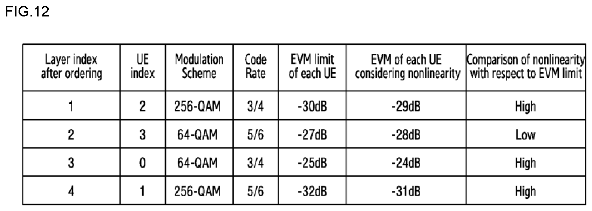

FIG. 12 illustrates an example of MU-MIMO according to embodiments of the disclosure.

Referring to FIG. 12, a specific example of a method for determining whether to perform NC and selecting SIC/SNIC by a reception device according to the operation sequence of FIG. 11 described above in a MU-MIMO environment is described. Accordingly, descriptions overlapping with those of FIG. 11 may be omitted.

As an embodiment, overlapped data signals may be received from four transmission devices (for example, UEs) in the MU-MIMO environment. In this case, unlike an index of each of the transmission devices, ordering may be performed on each of the overlapped data signals included in a received signal, based on at least one of a channel state or quality of the received signal (for example, reference signal received power (RSRP)). For example, the ordering may correspond to arrangement (or indexing) in descending order of RSRP. In embodiments of the disclosure, a signal received from each transmission device may be referred to as one packet. In addition, the transmission devices may have different modulation and coding schemes (MCSs) and EVM threshold values. However, the EVM may be determined according to a form of a transmission signal and/or a specification of PA. In this case, the EVM is merely one example of indicators for representing quality of the received signal. Accordingly, in addition to the EVM, MER, MSE, or SNR may also be used as an indicator for determining quality of the received signal.

For example, in a first stage, since nonlinearity (-29dB) of a first packet (e.g., the received signal through the first layer) is larger than an EVM threshold value (-30dB), the reception device may perform NC by considering the nonlinearity. In addition, since the nonlinearity (-29dB) of the first packet is less than an EVM threshold value (-27dB) of a second packet (e.g., a received signal through a second layer), the reception device may perform SIC in consideration of complexity of a signal processing procedure, rather than the nonlinearity.

For example, in a second stage, since nonlinearity (-28dB) of a second packet is less than an EVM threshold value (-27dB), the reception device may not perform NC. In addition, since the nonlinearity (-28 dB) of the second packet is less than an EVM threshold value (-25 dB) of a third packet (e.g., a received signal through a third layer), the reception device may perform SIC in consideration of complexity of a signal processing procedure as compared to nonlinearity.

For example, in a third stage, since nonlinearity (-24dB) of a third packet is larger than an EVM threshold value (-25dB), the reception device may perform NC in consideration of the nonlinearity. In addition, since the nonlinearity (-24dB) of the second packet is greater than an EVM threshold value (-32dB) of a fourth packet (e.g., a received signal through a fourth layer), the reception device may perform SNIC in consideration of nonlinearity rather than the complexity of the signal processing procedure.

For example, in a fourth stage, since nonlinearity (-31 dB) of a fourth packet is larger than an EVM threshold value (-32 dB), the reception device may perform NC by considering the nonlinearity.

Through the above-described first stage to fourth stage, a packet of each stage may be decoded, and, at each stage, the packet of a corresponding stage may be canceled from a received signal and transmitted to a subsequent stage, such that the reception device may perform successive nonlinear interference cancellation in a MU-MIMO environment. In addition, the reception device may determine whether to perform NC according to a degree of nonlinearity. In addition, the reception device may compare the degree of nonlinearity with complexity of a signal processing procedure to determine whether to perform SIC that does not consider nonlinearity or SNIC considering nonlinearity. In addition, embodiments of the disclosure may be applied regardless of a modulation form of a transmission signal and a received signal, such as cyclic prefix (CP)- OFDM or DFT-spread(s)-OFDM. Of course, the disclosure is not limited to the above example, and the above-described example is merely one example of a signal processing procedure according to the operation sequence of FIG. 11 described above.

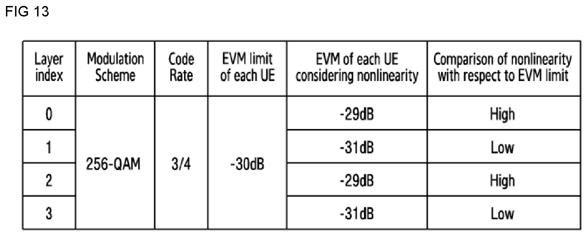

FIG. 13 illustrates an example of SU-MIMO according to embodiments of the disclosure.

Referring to FIG. 13, a specific example of a method for determining whether to perform NC and selecting SIC/SNIC by a reception device according to the operation sequence of FIG. 11 described above in an SU-MIMO environment is described. Accordingly, descriptions overlapping with those of FIG. 11 may be omitted.

In an embodiment, overlapped data signals may be received from a transmission device (e.g., a UE) in an SU-MIMO environment. In this case, each of the overlapped data signals included in the received signal may be indexed based on at least one of a channel state and a quality of the received signal (e.g., RSRP). For example, each data signal may be arranged (or indexed) in descending order of RSRP. For example, each of the data signals received from the transmission device may be referred to as one packet. However, unlike FIG. 12, since the data signals are received from one transmission device, MCS and EVM threshold values may all be identical. In this case, the EVM is merely one example of indicators for representing quality of the received signal. Accordingly, in addition to the EVM, MER, MSE, or SNR may also be used as an indicator for determining quality of the received signal. In addition, in the case of the EVM, a greater absolute value may indicate a smaller error, and thus may indicate better performance of the received signal.

For example, in a first stage, since nonlinearity (-29dB) of a first packet (e.g., a received signal through a first layer) is larger than an EVM threshold value (-30dB), the reception device may perform NC in consideration of nonlinearity. In addition, since the nonlinearity (-29dB) of the first packet is greater than the EVM threshold value (-30dB), the reception device may perform SNIC in consideration of the nonlinearity rather than complexity of a signal processing procedure.

For example, in a second stage, since nonlinearity (-31dB) of a second packet (e.g., a received signal through a second layer) is less than an EVM threshold value (-30dB), the reception device may not perform NC. In addition, since the nonlinearity (-31dB) of the second packet is less than the EVM threshold value (-30dB), the reception device may perform SIC in consideration of complexity of the signal processing procedure rather than the nonlinearity.

For example, in a third stage, since nonlinearity (-29dB) of a third packet (e.g., a received signal through a third layer) is larger than an EVM threshold value (-30dB), the reception device may perform NC by considering the nonlinearity. In addition, since nonlinearity (-24 dB) of the second packet is larger than the EVM threshold value (-30 dB), the reception device may perform SNIC in consideration of the nonlinearity rather than complexity of the signal processing procedure.

For example, in a fourth stage, since nonlinearity (-31 dB) of a fourth packet (e.g., a reception signal through a fourth layer) is less than an EVM threshold value (-30 dB), the reception device may not perform NC.

Through the above-described first stage to fourth stage, a packet of each stage may be decoded, and, at each stage, the packet of the corresponding stage may be canceled from a received signal and transmitted to a subsequent stage, such that the reception device may perform successive nonlinear interference cancellation in an SU-MIMO environment. In addition, the reception device may determine whether to perform NC according to a degree of nonlinearity. In addition, the reception device may compare the degree of nonlinearity with complexity of a signal processing procedure to determine whether to perform SIC that does not consider nonlinearity or SNIC considering nonlinearity. In addition, embodiments of the disclosure may be applied regardless of a modulation form of a transmission signal and a received signal, such as cyclic prefix (CP)-OFDM or DFT-spread (s)-OFDM. Of course, the disclosure is not limited to the above example, and the above example is merely one example of a signal processing procedure according to the operation sequence of FIG. 11 described above.

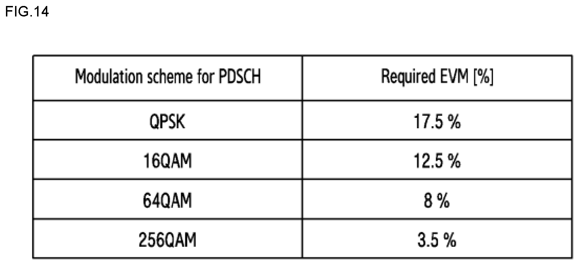

FIG. 14 illustrates a relationship between an MCS and an EVM according to embodiments of the disclosure.

Referring to FIG. 14, an EVM specification related to a 5G communication system of 3GPP is illustrated. In the table, as the modulation increases, a lower EVM value may be required. For example, in the case of a physical downlink shared channel (PDSCH) of the 5G communication system, when the MCS is 256QAM, an EVM requirement may be 3.5% (or -29.12dB).

On the other hand, in the case of EVM, as a measured symbol becomes closer to an ideal symbol, a magnitude decreases, and thus, the EVM may decrease. Accordingly, a lower EVM may indicate a better signal quality. On the other hand, a high EVM may indicate that the measured symbol becomes farther from the ideal symbol, and thus may indicate poor signal quality.

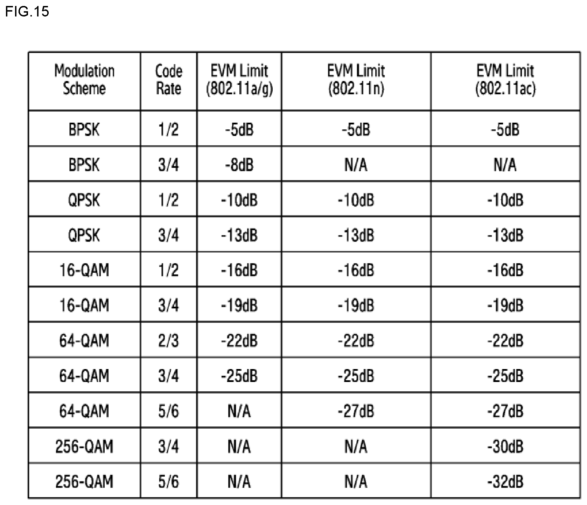

FIG. 15 illustrates a relationship between an MCS and an EVM limit according to embodiments of the disclosure.

Referring to FIG. 15, an EVM specification in a standard for Wi-Fi (e.g., **IEEE** 802.11) is illustrated. For example, a relationship between an MCS and an EVM threshold value in 802.11 may be defined, and as the MCS increases, the EVM threshold value may decrease. Accordingly, as the MCS increases, a requirement for signal quality may increase.

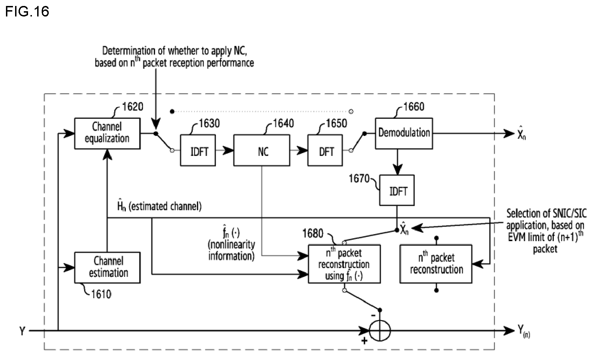

FIG. 16 illustrates an example of a signal processing procedure according to embodiments of the disclosure.

Referring to FIG. 16, a block diagram illustrating a signal processing procedure of an n-th stage including a method of determining whether to perform NC and selecting SIC/SNIC by a reception device is illustrated. However, the example given below describes the signal processing procedure in an MU-MIMO environment (e.g., FIG. 12 described above), but may also be applied to SU-MIMO (e.g., FIG. 13 described above).

In operation 1610, the reception device may perform channel estimation for a received signal (Y). For example, the reception device may estimate a channel state between a transmission device and a reception device, based on a reference signal commonly known to the transmission device and the reception device. In this case, the estimated channel may be represented as **Ĥ***ₙ*.

In operation 1620, the reception device may perform channel equalization through an equalizer, based on the estimated channel information. For example, the reception device may compensate for a channel distortion for the received signal (Y). Specifically, through channel equalization, the reception device may perform a procedure to have uniform characteristics in amplitude and phase over an entire frequency domain. In addition, the reception device may obtain, from a received signal to be decoded in an n-th stage, information (*f̂ₙ*(·)) on the nonlinearity experienced by the received signal. Nonlinearity information may be obtained by using a reference signal that is commonly known to the transmission device and the reception device, such as an existing reference signal (e.g., including at least one of a DMRS, a PSS, an SSS, an SRS, or a CSI-RS) or a reference signal separately defined for NC. However, the reception device may perform the nonlinearity information acquisition procedure before the channel equalization procedure. The reception device may compare nonlinearity of an n-th packet (e.g., a received signal through an n-th layer) with an EVM threshold value to determine whether to perform NC. As an embodiment, when the nonlinearity of the n-th packet is greater than the EVM threshold value, the reception device may identify that NC is to be performed in consideration of the nonlinearity. As an embodiment, in case that the nonlinearity of the n-th packet is less than the EVM threshold, the reception device may not perform NC.

In operation 1630, when the reception device has identified that NC is to be performed, the reception device may perform an **IDFT** on the n-th packet.

In operation 1640, after performing the **IDFT,** the reception device may perform NC. Specifically, the reception device may perform NC on the n-th packet, based on the nonlinearity information (*f̂ₙ*(· )) obtained before operation 1630.

In operation 1650, after performing NC, the reception device may perform **DFT.**

In operation 1660, the reception device may perform demodulation on the n-th packet for which NC has been performed. Accordingly, a demodulated signal (e.g., **X̂***ₙ*) for the n-th packet may be output.

In operation 1670, the reception device may perform an **IDFT** on the demodulated signal (e.g., **X̂***ₙ*) for the n-th packet. When reconstructing an original signal from a decoded data packet (e.g., **X̂***ₙ*), the reception device may select whether to consider the nonlinearity information (*f̂ₙ*(·)). As an embodiment, when nonlinearity of the n-th packet is less than an EVM threshold value of an (n+1)-th packet, the reception device may identify that SIC is to be performed in consideration of complexity of a signal processing procedure rather than the nonlinearity. In an embodiment, when the nonlinearity of the n-th packet is greater than the EVM threshold value of the (n+1)-th packet, the reception device may identify that the SNIC is performed in consideration of the nonlinearity rather than the complexity of the signal processing procedure.

In operation 1680, when the reception device identifies that SNIC is to be performed, the reception device may reconstruct the n-th packet by considering the nonlinearity information (*f̂ₙ*(·)). Alternatively, when the reception device identifies that SIC is to be performed, the reception device may reconstruct the n-th packet without considering the nonlinearity information (*f̂ₙ*(·)). In addition, the reception device may cancel the reconstructed n-th packet from the received signal (Y), and an output signal (Y_(n)) from which a component for the n-th packet is canceled may be used as a reception signal in a next stage ((n+1)-th stage).

However, the above-described operations are merely an example, and are not limited to an embodiment of the disclosure. Therefore, some of the above-described operations may be merged or divided into two or more operations. In addition, at least one of the above-described operations may be omitted, and a new operation may be added. In this case, the added at least one operation may be organically combined with the above-described operations.

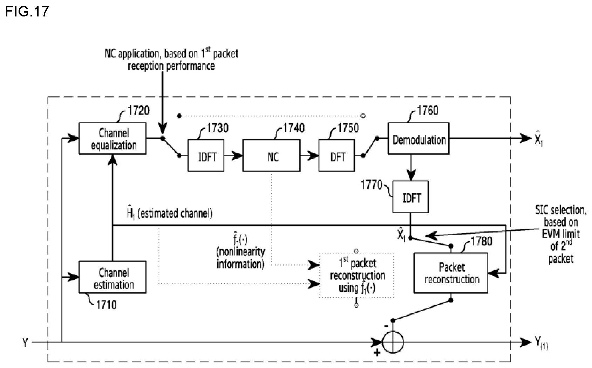

FIG. 17 illustrates an example of a signal processing procedure in a first stage according to embodiments of the disclosure.

Referring to FIG. 17, a block diagram illustrating a signal processing procedure of a first stage including a method of determining whether to perform NC and selecting SIC/SNIC by a reception device is illustrated. However, although the following example describes the signal processing procedure in an MU-MIMO environment (e.g., FIG. 12 described above), the following example may also be applied to SU-MIMO environment (e.g., FIG. 13 described above).

In operation 1710, the reception device may perform channel estimation on a received signal (Y). For example, the reception device may estimate a channel state between a transmission device and a reception device, based on a reference signal commonly known to the transmission device and the reception device. In this case, the estimated channel may be represented as **Ĥ**₁.

In operation 1720, the reception device may perform channel equalization through the equalizer, based on the estimated channel information. For example, the reception device may compensate for a channel distortion for a received signal (Y). Specifically, through channel equalization, the reception device may perform a procedure to have uniform characteristics in amplitude and phase over an entire frequency domain. In addition, the reception device may obtain, from a received signal to be decoded in a first stage, information (*f̂*₁(·)) on the nonlinearity experienced by the received signal. Nonlinearity information may be obtained by using a reference signal that is commonly known to the transmission device and the reception device, such as an existing reference signal (e.g., including at least one of a DMRS, a PSS, an SSS, an SRS, or a CSI-RS) or a reference signal separately defined for NC. However, the reception device may perform the nonlinearity information acquisition procedure before the channel equalization procedure. The reception device may compare nonlinearity of a first packet (e.g., a received signal through a first layer) with an EVM threshold value to determine whether to perform NC. In this case, since nonlinearity (-29dB) of the first packet (e.g., a reception signal through a first layer) is greater than an EVM threshold value (-30dB), the reception device may identify that it is necessary to perform NC in consideration of the nonlinearity.

In operation 1730, when the reception device identifies that NC is to be performed, the reception device may perform an **IDFT** on the first packet.

In operation 1740, after performing the **IDFT,** the reception device may perform NC. Specifically, the reception device may perform NC on the first packet, based on the nonlinearity information (*f̂*₁(· )) obtained before operation 1730.

In operation 1750, after performing NC, the reception device may perform DFT.

In operation 1760, the reception device may perform demodulation on the first packet for which NC has been performed. Accordingly, a demodulated signal (e.g., **X̂**₁) for the first packet may be output.

In operation 1770, the reception device may perform an **IDFT** on the demodulated signal (e.g., **X̂**₁) for the first packet. When reconstructing an original signal from a decoded data packet (e.g., **X̂**₁), the reception device may select whether to consider the nonlinearity information (*f̂*₁(·) ). In this case, nonlinearity (-29 dB) of the first packet is less than an EVM threshold value (-27 dB) of a second packet (e.g., a received signal through a second layer), and thus the reception device may identify that SIC is performed in consideration of complexity of a signal processing procedure, rather than the nonlinearity.

In operation 1780, when the reception device identifies that SIC is to be performed, the reception device may reconstruct the first packet without considering the nonlinearity information (*f̂*₁(·)). In addition, the reception device may cancel the reconstructed first packet from the reception signal (Y), and an output signal (Y_(1)) from which a component for the first packet is canceled may be used as a reception signal in a second stage.

However, the above-described operations are merely an example, and are not limited to an embodiment of the disclosure. Therefore, some of the above-described operations may be merged or divided into two or more operations. In addition, at least one of the above-described operations may be omitted, and a new operation may be added. In this case, the added at least one operation may be organically combined with the above-described operations.

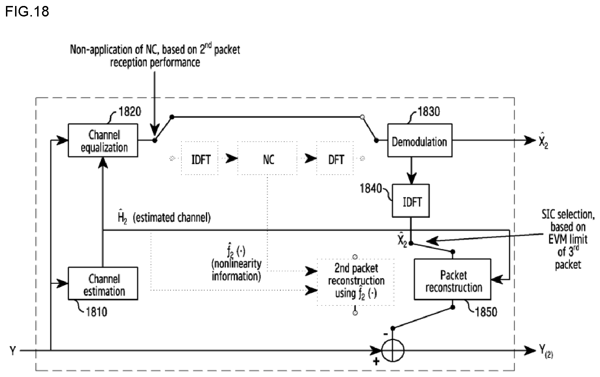

FIG. 18 illustrates an example of a signal processing procedure in a second stage according to embodiments of the disclosure.

Referring to FIG. 18, a block diagram illustrating a signal processing procedure of a second stage including a method of determining whether to perform NC and selecting SIC/SNIC by a reception device is illustrated. However, the following example describes a signal processing procedure in an MU-MIMO environment (e.g., FIG. 12 described above), but may also be applied to SU-MIMO (e.g., FIG. 13 described above).

In operation 1810, the reception device may perform channel estimation on a received signal (Y_(1)). For example, the reception device may estimate a channel state between a transmission device and a reception device, based on a reference signal commonly known to the transmission device and the reception device. The estimated channel may be represented as **Ĥ**₂·

In operation 1820, the reception device may perform channel equalization through an equalizer, based on the estimated channel information. For example, the reception device may compensate for a channel distortion for the received signal (Y)_(1). Specifically, through channel equalization, the reception device may perform a procedure to have uniform characteristics in amplitude and phase over the entire frequency domain. In addition, the reception device may obtain, from a received signal to be decoded in a second stage, information (*f̂*₂(·)) on the nonlinearity experienced by the received signal. Nonlinearity information may be obtained by using a reference signal that is commonly known to the transmission device and the reception device, such as an existing reference signal (e.g., including at least one of a DMRS, a PSS, an SSS, an SRS, or a CSI-RS) or a reference signal separately defined for NC. However, the reception device may perform the nonlinearity information acquisition procedure before the channel equalization procedure. The reception device may compare nonlinearity of a second packet (e.g., a received signal through a second layer) with an EVM threshold value to determine whether to perform NC. Since nonlinearity (-28dB) of the second packet (e.g., a received signal through a second layer) is less than an EVM threshold value (-27dB), the reception device may identify that the NC is not performed.

In operation 1830, when the reception device identifies that NC is not to be performed, the reception device may perform demodulation on a second packet. Accordingly, a demodulated signal (e.g., **X̂**₂) for the second packet may be output.

In operation 1840, the reception device may perform an **IDFT** on the demodulated signal (e.g., **X̂**₂) for the second packet. When reconstructing an original signal from the decoded data packet (e.g., **X̂**₂), the reception device may select whether to consider nonlinearity information (*f̂*₂(·)). In this case, since nonlinearity of the second packet (-28 dB) is less than an EVM threshold value (-25 dB) of a third packet (for example, a received signal through a third layer), the reception device may identify that SIC is to be performed in consideration of complexity of a signal processing procedure rather than the nonlinearity.

In operation 1850, when the reception device identifies that SIC is to be performed, the reception device may reconstruct the second packet without considering the nonlinearity information (*f̂*₂(·)). In addition, the reception device may cancel the reconstructed second packet from the received signal (Y_(1)), and an output signal (Y_(2)) from which a component for the second packet is canceled may be used as a received signal in a third stage.

However, the above-described operations are merely an example, and are not limited to an embodiment of the disclosure. Therefore, some of the above-described operations may be merged or divided into two or more operations. In addition, at least one of the above-described operations may be omitted, and a new operation may be added. In this case, the added at least one operation may be organically combined with the above-described operations.

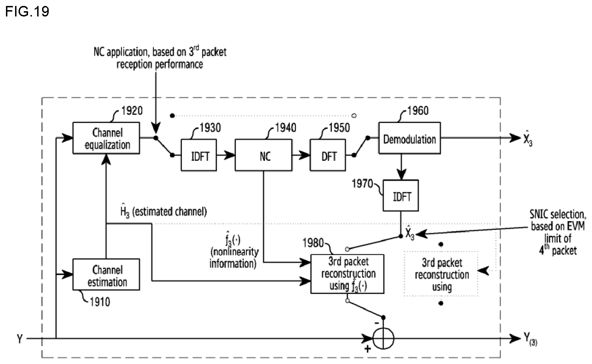

FIG. 19 illustrates an example of a signal processing procedure in a third stage according to embodiments of the disclosure.

Referring to FIG. 19, a block diagram illustrating a signal processing procedure of a third stage including a method of determining whether to perform NC and selecting SIC/SNIC by a reception device is illustrated. However, the following example describes a signal processing procedure in an MU-MIMO environment (e.g., FIG. 12 described above), but may also be applied to SU-MIMO (e.g., FIG. 13 described above).

In operation 1910, the reception device may perform channel estimation for a received signal (Y_(2)). For example, the reception device may estimate a channel state between the transmission device and the reception device, based on a reference signal commonly known to the transmission device and the reception device. In this case, the estimated channel may be represented as **Ĥ**₃.

In operation 1920, the reception device may perform channel equalization through an equalizer, based on the estimated channel information. For example, the reception device may compensate for a channel distortion for the received signal (Y_2). Specifically, through channel equalization, the reception device may perform a procedure to have uniform characteristics in amplitude and phase over the entire frequency domain. In addition, the reception device may obtain, from a received signal to be decoded in a third stage, information (*f̂*₃(·)) on the nonlinearity experienced by the received signal. Nonlinearity information may be obtained by using a reference signal that is commonly known to the transmission device and the reception device, such as an existing reference signal (e.g., including at least one of a DMRS, a PSS, an SSS, an SRS, or a CSI-RS) or a reference signal separately defined for NC. However, the reception device may perform the nonlinearity information acquisition procedure before the channel equalization procedure. The reception device may compare nonlinearity of a third packet (e.g., a received signal through a third layer) with an EVM threshold value to determine whether to perform NC. In this case, since nonlinearity (-24dB) of the third packet (e.g., a received signal through the third layer) is greater than the EVM threshold value (-25dB), the reception device may identify that NC is to be performed while considering nonlinearity.

In operation 1930, when the reception device identifies that NC is to be performed, the reception device may perform an **IDFT** on the third packet.

In operation 1940, after performing the **IDFT,** the reception device may perform NC. Specifically, the reception device may perform NC for the third packet, based on the nonlinearity information (*f̂*₃(·)) acquired before operation 1930.

In operation 1950, after performing NC, the reception device may perform **DFT.**

In operation 1960, the reception device may perform demodulation on the third packet for which NC has been performed. Accordingly, a demodulated signal (e.g., **X̂**₃) for the third packet may be output.

In operation 1970, the reception device may perform an **IDFT** on the demodulated signal (e.g., **X̂**₃) for the third packet. When reconstructing an original signal from a decoded data packet (e.g., **X̂**₃), the reception device may select whether to consider the nonlinearity information (*f̂*₃(·)). In this case, since nonlinearity of a third packet (-24 dB) is greater than an EVM threshold value (-32 dB) of a second packet (e.g., a received signal through a second layer), the reception device may identify that SNIC is to be performed in consideration of the nonlinearity rather than complexity of a signal processing procedure.

In operation 1980, when the reception device identifies that SNIC is to be performed, the reception device may reconstruct the third packet in consideration of nonlinearity information (*f̂*₃(·)). In addition, the reception device may cancel the reconstructed third packet from the received signal (Y_(2)) and an output signal (Y_(3)) from which a component for the third packet is canceled may be used as a received signal in a second stage.

However, the above-described operations are merely an example, and are not limited to an embodiment of the disclosure. Therefore, some of the above-described operations may be merged or divided into two or more operations. In addition, at least one of the above-described operations may be omitted, and a new operation may be added. In this case, the added at least one operation may be organically combined with the above-described operations.

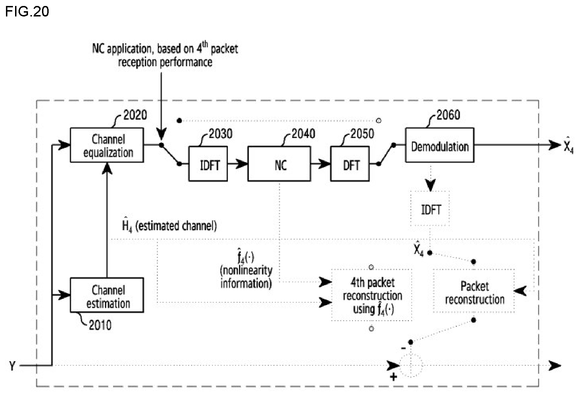

FIG. 20 illustrates an example of a signal processing procedure in a fourth stage according to embodiments of the disclosure.

Referring to FIG. 20, a block diagram illustrating a signal processing procedure of a fourth stage including a method of determining whether to perform NC and selecting SIC/SNIC by a reception device is illustrated. However, the following example describes a signal processing procedure in an MU-MIMO environment (e.g., FIG. 12 described above), but may also be applied to SU-MIMO (e.g., FIG. 13 described above).

In operation 2010, the reception device may perform channel estimation for a received signal (Y_3). For example, the reception device may estimate a channel state between a transmission device and a reception device, based on a reference signal that is commonly known to the transmission device and the reception device. The estimated channel may be represented as **Ĥ**₄.

In operation 2020, the reception device may perform channel equalization through an equalizer, based on the estimated channel information. For example, the reception device may compensate for the channel distortion for the received signal (Y_(3)). Specifically, through channel equalization, the reception device may perform a procedure to have uniform characteristics in amplitude and phase over the entire frequency domain. In addition, the reception device may obtain, from a received signal to be decoded in a fourth stage, information (*f̂*₄(·)) on the nonlinearity experienced by the received signal. Nonlinearity information may be obtained by using a reference signal that is commonly known to the transmission device and the reception device, such as an existing reference signal (e.g., including at least one of a DMRS, a PSS, an SSS, an SRS, or a CSI-RS) or a reference signal separately defined for NC. However, the reception device may perform the nonlinearity information acquisition procedure before the channel equalization procedure. The reception device may compare nonlinearity of a fourth packet (e.g., a received signal through a fourth layer) with an EVM threshold value to determine whether to perform NC. In this case, since nonlinearity (-31dB) of the fourth packet (e.g., a reception signal through a fourth layer) is greater than an EVM threshold value (-32dB), the reception device may identify that the NC is to be performed in consideration of the nonlinearity.

In operation 2030, when the reception device identifies that NC is to be performed, the reception device may perform an **IDFT** on the fourth packet.

In operation 2040, after performing the **IDFT,** the reception device may perform NC. Specifically, the reception device may perform NC on the fourth packet, based on the nonlinearity information (*f̂*₄(·))) acquired before operation 2030.

In operation 2050, after performing the NC, the reception device may perform **DFT.**

In operation 2060, the reception device may perform demodulation on the fourth packet for which NC has been performed. Therefore, the demodulated signal (e.g., **X̂**₄) for the fourth packet may be output.

However, the above-described operations are merely an example, and are not limited to an embodiment of the disclosure. Therefore, some of the above-described operations may be merged or divided into two or more operations. In addition, at least one of the above-described operations may be omitted, and a new operation may be added. In this case, the added at least one operation may be organically combined with the above-described operations.

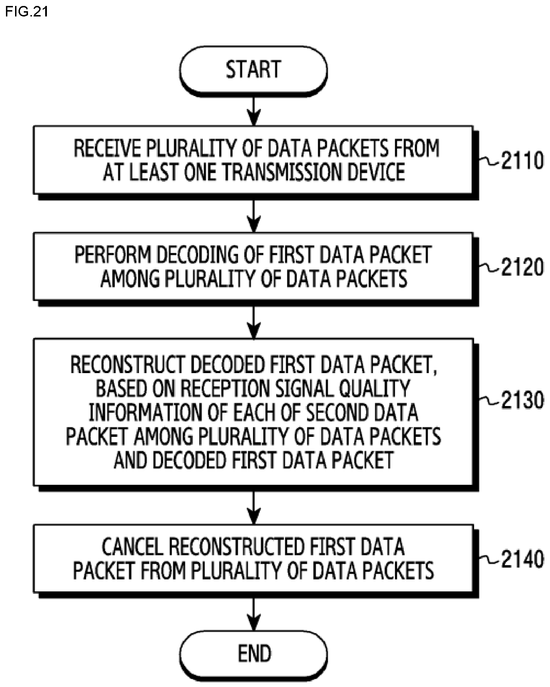

FIG. 21 illustrates an operation sequence of a reception device according to embodiments of the disclosure.

Referring to FIG. 21, in order for the reception device to perform an operation of successive interference cancellation on a received signal (hereinafter, a plurality of data packets), an operation sequence for determining whether to perform NC and selecting SIC or SNIC, based on nonlinearity information may be described. Hereinafter, the reception device may perform the operations of FIGS. 8 to 20 described above, and overlapping descriptions may be omitted.

In operation 2110, the reception device may receive a plurality of overlapped signals (for example, a plurality of data packets) from at least one transmission device. For example, the reception device may receive a plurality of overlapped data packets from one transmission device or may receive data packets in an overlapped manner from each of a plurality of transmission devices.

In operation 2120, the reception device may decode a first packet (hereinafter, a first data packet) among the plurality of data packets. In this case, decoding of the first data packet may be performed based on information on nonlinearity between the at least one transmission device and the reception device. For example, the nonlinearity information may be obtained by using a reference signal commonly known to the transmission device and the reception device, such as an existing reference signal (for example, including at least one of a DMRS, a PSS, an SSS, an SRS, or a CSI-RS) or a reference signal separately defined for NC. The reception device may determine whether to perform NC by comparing nonlinearity of the first data packet with an EVM threshold value.

In operation 2130, the reception device may reconstruct the decoded first data packet, based on information on the reception signal quality of the second data packet (hereinafter, a second data packet) among the multiple data packets and the decoded first data packet. For example, when the nonlinearity of the first data packet is greater than the EVM threshold value of the first data packet, the reception device may identify that the SNIC is to be performed by considering nonlinearity rather than the complexity of the signal processing procedure.

In operation 2140, the reception device may cancel the reconstructed first data packet from the multiple data packets.

However, the above-described operations are merely an example, and are not limited to an embodiment of the disclosure. Therefore, some of the above-described operations may be merged or divided into two or more operations. In addition, at least one of the above-described operations may be omitted, and a new operation may be added. In this case, the added at least one operation may be organically combined with the above-described operations.

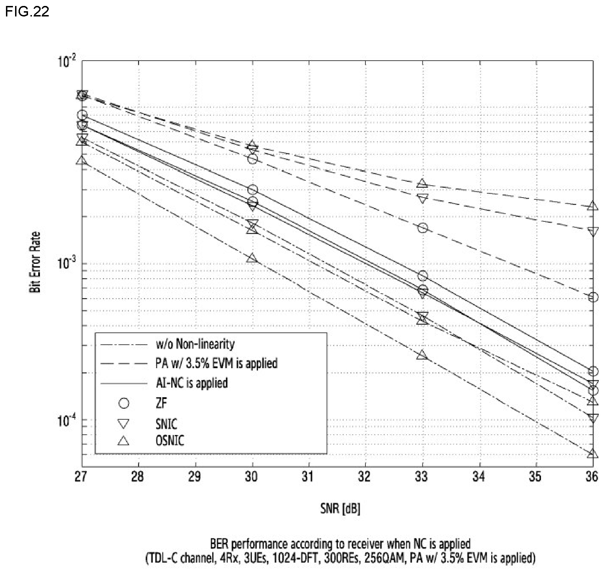

FIG. 22 illustrates a BER performance according to a receiver when NC is applied according to embodiments of the disclosure.

Referring to FIG. 22, when nonlinearity exists, a graph showing BER performance according to a type of receiver under a specific condition (e.g., when PA having a TDL-C channel, 4Rx, 3UEs, 1024-DFT, 300REs, 256QAM, and 3.5% EVM is applied) is illustrated. FIG. 22 may illustrate reception performance when SIC, OSIC, and ZF are performed in a situation in which signals distorted due to a nonlinear characteristic are received while sharing frequency, time, and space. For example, FIG. 22 may compare, for each reception device performing the OSIC, SIC, and ZF methods, a case in which there is no nonlinear characteristic, a case in which PA having 3.5% EVM is applied, and a case in which AI-NC according to embodiments of the disclosure is applied. In each reception device performing the OSIC, SIC, and ZF methods, a case in which AI-NC according to embodiments of the disclosure is applied may have a higher BER at the same SNR than a case in which there is no nonlinear characteristic. However, in each reception device performing the OSIC, SIC, and ZF methods, the case in which AI-NC according to embodiments of the disclosure is applied may have a lower BER at the same SNR than a case in which PA is applied and a nonlinear characteristic occurs. Therefore, when a nonlinear characteristic occurs due to application of PA, degradation in reception performance due to nonlinearity may be alleviated by applying the AI-NC method according to embodiments of the disclosure.

Therefore, according to embodiments of the disclosure, unlike a general SIC reception technique, excellent reception performance may be achieved by alleviating an error propagation problem even in a situation in which signals distorted due to nonlinearity are received while sharing frequency, time, and space, by applying decoding considering nonlinearity and reconstruction of an original signal using a decoded signal.

According to various embodiments of the disclosure, a method performed by a reception device in a wireless communication system may include receiving a plurality of data packets from at least one transmission device, decoding a first data packet among the plurality of data packets, reconstructing the decoded first data packet, based on a reception signal quality of a second data packet among the plurality of data packets and a reception signal quality of the decoded first data packet, and canceling the reconstructed first data packet from the plurality of data packets, wherein the decoding is performed based on information on nonlinearity between the at least one transmission device and the reception device.

In an embodiment, the decoding may include comparing a threshold value for the reception signal quality of the decoded first data packet with a reception signal quality based on the information on the nonlinearity, and compensating for nonlinearity for the first data packet in case that the reception signal quality based on the information on the nonlinearity is greater than the threshold value, wherein the threshold value is based on a modulation and coding scheme (MCS) of the first data packet.

In an embodiment, the reconstructing of the decoded first data packet may include identifying a reconstruction scheme of the decoded first data packet, based on a threshold value for the reception signal quality of the second data packet and reception signal quality based on the information on the nonlinearity of the first data packet, wherein the threshold value is based on an MCS of the second data packet, wherein the reconstruction scheme includes successive interference cancellation (SIC) or successive nonlinear interference cancellation (SNIC), wherein the SIC is a successive interference cancellation scheme that does not consider the information on the nonlinearity, and wherein the SNIC is a successive interference cancellation scheme based on the information on the nonlinearity.

In an embodiment, in case that the reception signal quality based on the information on the nonlinearity is less than or equal to the threshold value, the decoded first data packet may be reconstructed by SIC.

In an embodiment, in case that the reception signal quality based on the information on the nonlinearity is greater than the threshold value, the decoded first data packet may be reconstructed by SNIC.

In an embodiment, the method may further include obtaining the information on the nonlinearity, based on a reference signal received from the at least one transmission device, wherein the reference signal includes at least one of a demodulation reference signal (DMRS), a primary synchronization signal (PSS), a secondary synchronization signal (SSS), a sounding reference signal (SRS), or a channel state information reference signal (CSI-RS).

In an embodiment, the information on the reception signal quality may include at least one of an error vector magnitude (EVM), a modulation error (MER), a mean square error (MSE), or a signal-to-noise ratio (SNR).

In an embodiment, each of the at least one transmission device may include a terminal,
and, in case that the plurality of data packets are received from a plurality of terminals, the first data packet is a data packet received from a first terminal, the second data packet is a data packet received from a second terminal, and each of the first terminal and the second terminal is indexed based on a strength of a received signal.

In an embodiment, each of the at least one transmission device may include a terminal,
and, in case that the plurality of data packets are received from one terminal, each of the first data packet and the second data packet is received through a plurality of antennas related to the reception device, and each of the first data packet and the second data packet is indexed based on a strength of a received signal.

In an embodiment, the decoding may be performed based on channel estimation information with the at least one transmission device and discrete Fourier transform (DFT) of the information on the nonlinearity.

According to various embodiments of the disclosure, a reception device in a wireless communication system may include a transceiver and at least one controller connected to the transceiver, wherein the at least one controller is configured to receive a plurality of data packets from at least one transmission device, decode a first data packet among the plurality of data packets, reconstruct the decoded first data packet, based on a reception signal quality of a second data packet among the plurality of data packets and a reception signal quality of the decoded first data packet, and cancel the reconstructed first data packet from the plurality of data packets, wherein the decoding is performed based on information on nonlinearity between the at least one transmission device and the reception device.

In an embodiment, the at least one controller may be configured to compare a threshold value for the reception signal quality of the decoded first data packet with a reception signal quality based on the information on the nonlinearity, and compensate for nonlinearity for the first data packet in case that the reception signal quality based on the information on the nonlinearity is greater than the threshold value, wherein the threshold value is based on a modulation and coding scheme (MCS) of the first data packet.

In an embodiment, the at least one controller may be configured to identify a reconstruction scheme of the decoded first data packet, based on a threshold value for the reception signal quality of the second data packet and a reception signal quality based on the information on the nonlinearity of the first data packet, wherein the threshold value is based on an MCS of the second data packet, the reconstruction scheme includes successive interference cancellation (SIC) or successive nonlinear interference cancellation (SNIC), the SIC is a successive interference cancellation scheme that does not consider the information on the nonlinearity, and the SNIC is a successive interference cancellation scheme based on the information on the nonlinearity.

In an embodiment, in case that the reception signal quality based on the information on the nonlinearity is less than or equal to the threshold value, the decoded first data packet may be reconstructed by SIC.

In an embodiment, in case that the reception signal quality based on the information on the nonlinearity is greater than the threshold value, the decoded first data packet may be reconstructed by SNIC.

In an embodiment, the at least one controller may be further configured to obtain the information on the nonlinearity, based on a reference signal received from the at least one transmission device, wherein the reference signal includes at least one of a demodulation reference signal (DMRS), a primary synchronization signal (PSS), a secondary synchronization signal (SSS), a sounding reference signal (SRS), or a channel state information reference signal (CSI-RS).

In an embodiment, the information on the reception signal quality may include at least one of an error vector magnitude (EVM), a modulation error (MER), a mean square error (MSE), or a signal-to-noise ratio (SNR).

In an embodiment, each of the at least one transmission device may include a terminal, and, in case that the plurality of data packets are received from a plurality of terminals, the first data packet is a data packet received from a first terminal, the second data packet is a data packet received from a second terminal, and each of the first terminal and the second terminal is indexed based on a strength of a received signal.

In an embodiment, each of the at least one transmission device may include a terminal,
and, in case that the plurality of data packets are received from one terminal, each of the first data packet and the second data packet is received through a plurality of antennas related to the reception device, and each of the first data packet and the second data packet is indexed based on a strength of a received signal.

In an embodiment, the decoding may be performed based on channel estimation information with the at least one transmission device and discrete Fourier transform (DFT) of the information on the nonlinearity.

Methods disclosed in the claims or methods according to the embodiments described in the specification of the disclosure may be implemented by hardware, software, or a combination of hardware and software.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, the program may be stored in a memory configured as a combination of some or all of them. In addition, a plurality of such memories may be included.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing embodiments of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural, and therefore, either an element expressed in the plural may also include a single element or an element expressed in the singular may also include multiple elements

Meanwhile, although specific embodiments of the present disclosure have been described in detail, various modifications may be made without departing from the scope of the present disclosure. Therefore, the scope of the present disclosure should not be limited to the described embodiments, but should be defined by the claims and equivalents thereof.

## Claims

1. A method performed by a reception device in a wireless communication system, the method comprising:
receiving a plurality of data packets from at least one transmission device;
decoding a first data packet among the plurality of data packets;
reconstructing the decoded first data packet, based on a reception signal quality of a second data packet among the plurality of data packets and a reception signal quality of the decoded first data packet; and
canceling the reconstructed first data packet from the plurality of data packets,
wherein the decoding is performed based on information on nonlinearity between the at least one transmission device and the reception device.

2. The method of claim 1, wherein the decoding comprises:
comparing a threshold value for the reception signal quality of the decoded first data packet with a reception signal quality based on the information on the nonlinearity; and
in case that the reception signal quality based on the information on the nonlinearity is greater than the threshold value, compensating for nonlinearity for the first data packet,
wherein the threshold value is based on a modulation and coding scheme (MCS) of the first data packet.

3. The method of claim 1, wherein the reconstructing of the decoded first data packet comprises identifying a reconstruction scheme of the decoded first data packet, based on a threshold value for the reception signal quality of the second data packet and a reception signal quality based on the information on the nonlinearity of the first data packet,
wherein the threshold value is based on an MCS of the second data packet,
wherein the reconstruction scheme includes successive interference cancellation (SIC) or successive nonlinear interference cancellation (SNIC),
wherein the SIC is a successive interference cancellation scheme that does not consider the information on the nonlinearity, and
wherein the SNIC is a successive interference cancellation scheme based on the information on the nonlinearity.

4. The method of claim 3, wherein in case that the reception signal quality based on the information on the nonlinearity is less than or equal to the threshold value, the decoded first data packet is reconstructed by SIC.

5. The method of claim 3, wherein in case that the reception signal quality based on the information on the nonlinearity is greater than the threshold value, the decoded first data packet is reconstructed by SNIC.

6. The method of claim 1, further comprising obtaining the information on the nonlinearity, based on a reference signal received from the at least one transmission device,
wherein the reference signal includes at least one of a demodulation reference signal (DMRS), a primary synchronization signal (PSS), a secondary synchronization signal (SSS), a sounding reference signal (SRS), or a channel state information reference signal (CSI-RS).

7. The method of claim 1, wherein the information on the reception signal quality includes at least one of an error vector magnitude (EVM), a modulation error (MER), a mean square error (MSE), or a signal-to-noise ratio (SNR).

8. The method of claim 1, wherein each of the at least one transmission device includes a terminal,
wherein in case that the plurality of data packets are received from a plurality of terminals, the first data packet is a data packet received from a first terminal, and the second data packet is a data packet received from a second terminal, and
wherein each of the first terminal and the second terminal is indexed based on a strength of a received signal.

9. A reception device in a wireless communication system, comprising:
a transceiver; and
at least one controller connected to the transceiver,
wherein the at least one controller is configured to:
receive a plurality of data packets from at least one transmission device;
decode a first data packet among the plurality of data packets;
reconstruct the decoded first data packet, based on a reception signal quality of a second data packet among the plurality of data packets and a reception signal quality of the decoded first data packet; and
cancel the reconstructed first data packet from the plurality of data packets, and
wherein the decoding is performed based on information on nonlinearity between the at least one transmission device and the reception device.

10. The reception device of claim 9, wherein the at least one controller is configured to:
compare a threshold value for the reception signal quality of the decoded first data packet with a reception signal quality based on the information on the nonlinearity; and
in case that the reception signal quality based on the information on the nonlinearity is greater than the threshold value, compensate for nonlinearity for the first data packet, and
wherein the threshold value is based on a modulation and coding scheme (MCS) of the first data packet.

11. The reception device of claim 9, wherein the at least one controller is configured to identify a reconstruction scheme of the decoded first data packet, based on a threshold value for the reception signal quality of the second data packet and a reception signal quality based on the information on the nonlinearity of the first data packet,
wherein the threshold value is based on an MCS of the second data packet,
wherein the reconstruction scheme includes successive interference cancellation (SIC) or successive nonlinear interference cancellation (SNIC),
wherein the SIC is a successive interference cancellation scheme that does not consider the information on the nonlinearity, and
wherein the SNIC is a successive interference cancellation scheme based on the information on the nonlinearity.

12. The reception device of claim 11, wherein in case that the reception signal quality based on the information on the nonlinearity is less than or equal to the threshold value, the decoded first data packet is reconstructed by SIC.

13. The reception device of claim 11, wherein in case that the reception signal quality based on the information on the nonlinearity is greater than the threshold value, the decoded first data packet is reconstructed by SNIC.

14. The reception device of claim 9, wherein the at least one controller is further configured to obtain the information on the nonlinearity, based on a reference signal received from the at least one transmission device, and
wherein the reference signal includes at least one of a demodulation reference signal (DMRS), a primary synchronization signal (PSS), a secondary synchronization signal (SSS), a sounding reference signal (SRS), or a channel state information reference signal (CSI-RS).

15. The reception device of claim 9, wherein the information on the reception signal quality includes at least one of an error vector magnitude (EVM), a modulation error (MER), a mean square error (MSE), or a signal-to-noise ratio (SNR).
